# EUROPEAN PATENT APPLICATION

(11) **EP 4 661 524 A1**
(43) Date of publication of application: **10.12.2025**
(21) Application number: 24773964.2
(22) Date of filing: 12.03.2024
(51) Int. Cl.: H04W 60/00

(54) **METHOD AND APPARATUS FOR REGISTERING TERMINAL DEVICE**

(30) Priority: 17.03.2023 CN 202310296808
(71) Applicant: Huawei Technologies Co., Ltd., Shenzhen, Guangdong 518129 (CN)
(72) Inventor: FENG, Zhao, Shenzhen, Guangdong 518129 (CN); ZHANG, Zhiqin, Shenzhen, Guangdong 518129 (CN); ZHU, Haoren, Shenzhen, Guangdong 518129 (CN); WANG, Yuan, Shenzhen, Guangdong 518129 (CN)
(74) Representative: Pfenning, Meinig & Partner mbB
(86) International application number: PCT/CN2024/081253
(87) International publication number: WO 2024/193398

(57) **Abstract**

This application provides a method for registering a terminal device, and an apparatus, to reduce costs of implementing access network sharing. The method includes: A first mobility management network element in a first network receives a first message from an access network element, and the first mobility management network element requests a second mobility management network element in a second network to register a terminal device. In this way, even if there is no physical connection between the second network and the access network element, the second network can establish wireless communication with the access network element, and provide a service for the terminal device, to implementing access network sharing. This reduces costs of implementing access network sharing.

## Description

### CROSS-REFERENCE TO RELATED APPLICATIONS

This application claims priority to Chinese Patent Application No. 202310296808.8, filed with the China National Intellectual Property Administration on March 17, 2023 and entitled "METHOD FOR REGISTERING TERMINAL DEVICE, AND APPARATUS", which is incorporated herein by reference in its entirety.

### TECHNICAL FIELD

Embodiments of this application relate to the field of communication technologies, and in particular, to a method for registering a terminal device, and an apparatus.

### BACKGROUND

Network sharing (sharing) is an important means to reduce network deployment costs. For example, an operator A can share a network of an operator B without deploying the network, which reduces network deployment costs of the operator A. Network sharing can be classified into site sharing, access network sharing, core network sharing, and the like depending on scopes of shared networks. Access network sharing may be understood as that a plurality of core networks share one access network. The access network shared by the plurality of core networks may be referred to as a shared access network.

In the access network sharing solution, there is a direct physical connection (for example, an optical fiber connection) between the shared access network and the plurality of core networks, so that users can communicate with any one of the plurality of core networks through the shared access network. If there is no direct physical connection between the shared access network and a core network in the plurality of core networks, a physical optical fiber needs to be deployed between the shared access network and the core network, to establish a physical connection between the shared access network and the core network, so as to implement access network sharing. However, this undoubtedly results in higher costs of implementing access network sharing.

### SUMMARY

Embodiments of this application provide a method for registering a terminal device, and an apparatus, to reduce costs of implementing access network sharing.

According to a first aspect, an embodiment of this application provides a method for registering a terminal device. The method may be performed by a first mobility management network element. The first mobility management network element is, for example, a mobility management network element in a first network. The first mobility management network element is, for example, an access and mobility management function (access and mobility management function, AMF) or a mobility management entity (mobility management entity, MME). The method includes: receiving a first message from an access network element, where the first message is used to request registration of a terminal device, and the first message indicates an identifier of a second network; sending a second message to a second mobility management network element in the second network based on the identifier of the second network; and receiving a third message from the second mobility management network element, where the third message indicates that registration of the terminal device is accepted.

In this embodiment of this application, the access network element can determine an address of the second mobility management network element via the first mobility management network element, and request the second mobility management network element to register the terminal device. The second mobility management network element can register the terminal device. In this way, the second mobility management network element serves as a control point for registering the terminal device. In this way, even if there is no physical connection between the access network element and the second network, the second mobility management network element in the second network can register the terminal device, so that the second network provides a service for the terminal device. This helps reduce costs of implementing access network sharing. In addition, because the second mobility management network element may interact with a network element in the second network to implement a process of registering the terminal device, that is, the second mobility management network element does not need to interact with a network element in the first network in this process, a simplified process of registering the terminal device is provided. This helps reduce signaling interaction in the process of registering the terminal device, and helps improve efficiency of registering the terminal device. In addition, the first network and the second network may be of any type. For example, the first network and the second network are of a same type, or the first network and the second network are of different types. Specifically, for example, the first network is a 4^{th} generation (4^{th} generation, 4G) communication network, and the second network is a 5^{th} generation (5^{th} generation, 5G) communication network. In view of this, the method provided in this embodiment of this application has strong applicability, and service continuity of the terminal device in a plurality of types of networks can be ensured.

In a possible implementation, the method further includes: determining, based on the identifier of the second network, that registration of the terminal device is allowed. It should be understood that, before sending the second message, the first mobility management network element may determine that registration of the terminal is allowed.

Optionally, the first mobility management network element may pre-store an identifier of at least one network that is allowed to perform service interaction with the first network. If the identifier of the second network belongs to the identifier of the at least one network, the first mobility management network element determines that registration of the terminal device is allowed. Conversely, if the identifier of the second network does not belong to the identifier of the at least one network, the first mobility management network element determines that registration of the terminal device is not allowed.

In the foregoing implementation, the first mobility management network element can determine that registration of the terminal device is allowed, to ensure that the terminal device can be successfully registered subsequently. This helps improve a success rate of registering the terminal device, and avoids a case in which resources of each network element are wasted because the terminal device is not allowed to register but a subsequent procedure is still performed.

In a possible implementation, several possible forms of the first message are provided. In a first form, for example, the first message includes a registration request message and a first parameter, and one of the registration request message and the first parameter includes the identifier of the second network and/or an identifier of the terminal device. In a second form, for example, the first message includes a registration request message and a first parameter, and further includes the identifier of the second network and/or an identifier of the terminal device. The identifier of the terminal device may be used to determine the identifier of the second network. The first parameter is used to assist in accessing the terminal device.

In the foregoing implementation, the identifier of the second network and/or the identifier of the terminal device may be carried in the registration request message, the first parameter, or content other than the registration request message and the first parameter in the first message. A plurality of methods for indicating the identifier of the second network are provided. In addition, these carrying manners enable the first mobility management network element to determine the identifier of the second network by parsing only a part of the content of the first message. This helps reduce a processing amount of the first mobility management network element and reduce difficulty in determining the identifier of the second network.

In a possible implementation, when the first message further includes the first parameter, and the first parameter includes the identifier of the second network and/or the identifier of the terminal device, the first message indicates the first mobility management network element not to parse the registration request message; or when the first message further includes the first parameter, and the first message further includes the identifier of the second network and/or the identifier of the terminal device, the first message indicates the first mobility management network element not to parse the registration request message and the first parameter.

In the foregoing implementation, the first message may indicate not to parse the registration request message, or indicate not to parse the registration request message and the first parameter. In this way, after receiving the first message, the first mobility management network element may determine a part that does not need to be parsed in the first message, and correspondingly the first mobility management network element may parse the part of the first message (for example, content other than the content that is not parsed), and may determine the identifier of the second network. This helps the first mobility management network element determine the identifier of the second network more directly and quickly.

In a possible implementation, the second message may further include the first parameter.

In the foregoing implementation, the second message may include a part or all of the first message, so that the first mobility management network element can generate the second message even if the first mobility management network element does not parse all content in the first message, making a manner of generating the second message simpler.

In a possible implementation, the second message includes a first connection identifier and/or the identifier of the terminal device, the third message includes a registration accept message, the third message further includes the first connection identifier and/or the identifier of the terminal device, the registration accept message indicates that registration of the terminal device is accepted, and the first connection identifier identifies a connection between the access network element and the first mobility management network element. The method further includes: sending the registration accept message to the terminal device via the access network element based on the first connection identifier and/or the identifier of the terminal device.

In the foregoing implementation, the first mobility management network element may send the registration accept message to the terminal device based on the first connection identifier and/or the identifier of the terminal device in the third message, so that a plurality of manners of communication between the first mobility management network element and the terminal device are provided. In addition, the terminal device can determine a result of registering the terminal device in a timely manner. This helps improve user experience of using the terminal device.

In a possible implementation, sending the second message to the second mobility management network element in the second network based on the identifier of the second network includes: determining an address of the second mobility management network element based on the identifier of the second network; and sending a fourth message to a security edge protection proxy in the second network, so that the security edge protection proxy in the second network sends the second message to the second mobility management network element, where the fourth message includes the address of the second mobility management network element and the registration request message.

In the foregoing implementation, the first mobility management network element can determine the address of the second mobility management network element based on the identifier of the second network, and send the second message to the second mobility management network element by using the security edge protection proxy in the second network, so that a manner in which the first mobility management network element discovers the second mobility management network element is simple and direct.

In a possible implementation, the first network is a visited network of the terminal device, and the second network is a home network of the terminal device.

In the foregoing implementation, because the home network of the terminal device is generally fixed, a control point for registering the terminal device is the second mobility management network element in the home network. In this way, even if the terminal device is subsequently handed over to another network, the control point for registering the terminal device may still be the second mobility management network element. In other words, the terminal device does not need to switch the control point for registering the terminal device, so that service continuity of the terminal device can be maintained to a maximum extent. This improves user experience of using the terminal device. For example, when the terminal device is handed over from the second network to a third network, the terminal device may still register with the network via the second mobility management network element, so that the terminal device can be quickly handed over to the third network without being powered off to hand over to the third network.

In a possible implementation, the access network element is an access network element shared between the first network and the second network. The shared access network element may be understood as that a plurality of networks may provide a service for the terminal device via the shared access network element.

According to a second aspect, an embodiment of this application provides a method for registering a terminal device. The method may be performed by a second mobility management network element. The second mobility management network element is, for example, a second mobility management network element in a second network, and the second mobility management network element is, for example, an AMF or an MME. The method includes: receiving a second message from a first mobility management network element in a first network, where the second message includes a registration request message, and the registration request message is used to request registration of a terminal device; and sending a third message to the first mobility management network element, where the third message indicates that registration of the terminal device is accepted.

In a possible implementation, the second message and the third message each include a first connection identifier and/or an identifier of the terminal device, and the first connection identifier identifies a connection between an access network element and the first mobility management network element.

In a possible implementation, before sending the third message to the first mobility management network element, the method further includes at least one of the following: sending, to a unified data management network element in the second network, a message used to request to obtain subscription information of the terminal device, and receiving the subscription information of the terminal device from the unified data management network element in the second network; sending, to an authentication service network element in the second network, a message used to request to obtain authorization information of the terminal device, and receiving the authorization information of the terminal device from the authentication service network element in the second network; or sending, to a policy control network element in the second network, a message used to request to obtain access policy information of the terminal device, and receiving the access policy information of the terminal device from the policy control network element in the second network.

In a possible implementation, the second message further includes a first parameter; and one of the registration request message and the first parameter includes an identifier of the second network and/or an identifier of the terminal device, where the first parameter is used to assist in accessing the terminal device, and the identifier of the terminal device is used to determine the identifier of the second network.

In a possible implementation, the first network is a visited network of the terminal device, and the second network is a home network of the terminal device.

In a possible implementation, the access network element is an access network element shared between the first network and the second network.

According to a third aspect, an embodiment of this application provides a method for registering a terminal device. The method may be performed by an access network element. The access network element is, for example, a base station or a central unit (centralized unit, CU). The central unit may also be referred to as an aggregation unit, a distributed unit (distributed unit, DU), or the like. The method includes: receiving a fifth message from a terminal device, where the fifth message includes a registration request message, the registration request message is used to request registration of the terminal device, the fifth message indicates an identifier of a second network, and the identifier of the second network is used to determine a second mobility management network element in the second network; sending a first message to a first mobility management network element in a first network, where the first message includes the registration request message, and the first message indicates the identifier of the second network; and receiving a registration accept message from the first mobility management network element, where the registration accept message indicates that the second mobility management network element accepts registration of the terminal device.

In a possible implementation, the fifth message further includes a second parameter; and one of the registration request message and the second parameter includes the identifier of the second network and/or an identifier of the terminal device, where the second parameter is used to assist in accessing the terminal device, and the identifier of the terminal device is used to determine the identifier of the second network.

In a possible implementation, the first message further includes a first parameter, and one of the registration request message and the first parameter includes the identifier of the second network and/or the identifier of the terminal device; or when the first message includes the registration request message and a first parameter, the first message further includes the identifier of the second network and/or the identifier of the terminal device, where the first parameter is used to assist in accessing the terminal device, and the identifier of the terminal device is used to determine the identifier of the second network.

In a possible implementation, when the first message further includes the first parameter, and the first parameter includes the identifier of the second network and/or the identifier of the terminal device, the first message indicates the first mobility management network element not to parse the registration request message; or when the first message further includes the first parameter, and the first message further includes the identifier of the second network and/or the identifier of the terminal device, the first message indicates the first mobility management network element not to parse the registration request message and the first parameter.

In a possible implementation, the method further includes: determining, based on the identifier of the second network, that registration of the terminal device is allowed.

In a possible implementation, the first network is a visited network of the terminal device, and the second network is a home network of the terminal device.

In a possible implementation, the access network element is an access network element shared between the first network and the second network.

According to a fourth aspect, an embodiment of this application provides a method for registering a terminal device. The method may be performed by a first mobility management network element. The first mobility management network element is, for example, a mobility management network element in a first network, and the first mobility management network element is, for example, an AMF or an MME. The method includes: receiving a sixth message from an access network element, where the sixth message is used to request to set up a communication connection between the access network element and a second mobility management network element in a second network, and the sixth message includes an address of the second mobility management network element; sending the sixth message to the second mobility management network element; and receiving a seventh message from the second mobility management network element, where the seventh message indicates that the second mobility management network element accepts setup of the communication connection to the access network element.

In this embodiment of this application, the access network element can determine the address of the second mobility management network element in the second network, and establish a connection to the second mobility management network element via the first mobility management network element or the like. In this way, even if there is no physical connection between the access network element and the second network, the access network element can establish a wireless communication with the second network, to implement access network sharing. This helps reduce implementation costs of access network sharing. In addition, the access network element can directly communicate with the second mobility management network element. In this case, subsequently, the access network element can directly request the second mobility management network element to register the terminal device without involvement of another network element. This helps simplify a procedure of registering the terminal device, reduce signaling, and the like, and helps improve efficiency of registering the terminal device.

In a possible implementation, the sixth message includes an identifier of the second network and/or an identifier of the first network, and the identifier of the first network is used to determine the identifier of the second network.

In the foregoing implementation, the sixth message may include the identifier of the second network and/or the identifier of the first network, so that the second mobility management network element subsequently determines whether to accept setup of the communication connection to the access network element.

In a possible implementation, the seventh message includes a connection setup response message and an address of the access network element, and the connection setup response message indicates that the second mobility management network element accepts setup of the communication connection to the access network element. The method further includes: sending the connection setup response message to the access network element based on the address of the access network element.

In the foregoing implementation, the first mobility management network element can communicate with the access network element based on the address of the access network element in the seventh message. This provides a manner of communicating with the access network element. In addition, the access network element can determine, in a timely manner, whether the second mobility management network element accepts a connection setup, enabling the access network element to request, in a timely manner, the second mobility management network element to register the terminal device.

In a possible implementation, the first network is a visited network of the terminal device, and the second network is a home network of the terminal device.

In a possible implementation, the access network element is an access network element shared between the first network and the second network.

According to a fifth aspect, an embodiment of this application provides a method for registering a terminal device. The method may be applied to a second mobility management network element. The second mobility management network element is, for example, a mobility management network element in a second network, and the second mobility management network element is, for example, an AMF or an MME. The method includes: receiving a sixth message from a first mobility management network element in a first network, where the sixth message is used to request to set up a communication connection between an access network element and the second mobility management network element in the second network; and sending a seventh message to the first mobility management network element, where the seventh message indicates that the second mobility management network element accepts setup of the communication connection to the access network element.

In a possible implementation, after sending the seventh message to the first mobility management network element in the first network, the method further includes: receiving an eighth message from the access network element, where the eighth message is used to request registration of a terminal device; and sending a ninth message to the access network element, where the ninth message indicates that registration of the terminal device is accepted.

In a possible implementation, before sending the seventh message to the first mobility management network element in the first network, the method further includes at least one of the following: sending, to a unified data management network element in the second network, a message used to request to obtain subscription information of the terminal device, and receiving the subscription information of the terminal device from the unified data management network element in the second network; sending, to an authentication service network element in the second network, a message used to request to obtain authorization information of the terminal device, and receiving the authorization information of the terminal device from the authentication service network element in the second network; or sending, to a policy control network element in the second network, a message used to request to obtain access policy information of the terminal device, and receiving the access policy information of the terminal device from the policy control network element in the second network.

In a possible implementation, the seventh message includes an identifier of the second network and/or an identifier of the first network, and the identifier of the first network is used to determine the identifier of the second network; and the method further includes: determining, based on the identifier of the second network and/or the identifier of the first network, that setup of the communication connection to the access network element is accepted.

In a possible implementation, the first network is a visited network of the terminal device, and the second network is a home network of the terminal device.

In a possible implementation, the access network element is an access network element shared between the first network and the second network.

According to a sixth aspect, an embodiment of this application provides a method for registering a terminal device. The method may be performed by an access network element. The access network element is, for example, a base station, a CU, or a DU. The method includes: receiving a tenth message from a terminal device, where the tenth message includes a registration request message, the registration request is used to request registration of the terminal device, and the tenth message indicates an identifier of a second network; sending a sixth message to a first mobility management network element in a first network, where the sixth message is used to request to set up a communication connection between the access network element and a second mobility management network element in the second network, the sixth message includes an address of the second mobility management network element, and the address of the second mobility management network element is related to the identifier of the second network; and receiving a connection setup response message from the first mobility management network element, where the connection setup response message indicates that the second mobility management network element accepts setup of the communication connection to the access network element.

It should be understood that, that the address of the second mobility management network element is related to the identifier of the second network may be understood as that the address of the second mobility management network element is determined based on the identifier of the second network. Optionally, the address of the second mobility management network element includes a domain name, an Internet Protocol address, or the like of the second mobility management network element.

In a possible implementation, the tenth message further includes a second parameter, and one of the registration request message and the second parameter includes the identifier of the second network and/or an identifier of the terminal device, where the second parameter is used to assist in accessing the terminal device, and the identifier of the terminal device is used to determine the identifier of the second network.

In a possible implementation, after receiving the connection setup response message from the first mobility management network element, the method further includes: sending an eighth message to the second mobility management network element, where the eighth message is used to request registration of the terminal device; and receiving a ninth message from the second mobility management network element, where the ninth message indicates that registration of the terminal device is accepted.

In a possible implementation, the method further includes: determining, based on the identifier of the second network, that registration of the terminal device is allowed.

In a possible implementation, the first network is a visited network of the terminal device, and the second network is a home network of the terminal device.

In a possible implementation, the access network element is an access network element shared between the first network and the second network.

According to a seventh aspect, an embodiment of this application provides a method for registering a terminal device. The method may be performed by a communication system. The communication system includes, for example, a first mobility management network element in a first network and a second mobility management network element in a second network. The method includes: The first mobility management network element in the first network receives a first message from an access network element, where the first message includes a registration request message, the registration request message is used to request registration of a terminal device, and the first message indicates an identifier of the second network. The first mobility management network element sends a second message to the second mobility management network element in the second network based on the identifier of the second network, where the second message includes the registration request message. The second mobility management network element sends a third message to the first mobility management network element, where the third message indicates that registration of the terminal device is accepted.

In a possible implementation, the communication system further includes the access network element, and the access network element receives a fifth message from the terminal device, where the fifth message includes the registration request message, and the fifth message indicates the identifier of the second network.

Optionally, the first mobility management network element may further perform the method performed by the first mobility management network element in any one of the first aspect and the possible implementations, the second mobility management network element may further perform the method performed by the second mobility management network element in any one of the second aspect and the possible implementations, and the access network element may further perform the method performed by the access network element in any one of the third aspect and the possible implementations. Details are not described herein again.

According to an eighth aspect, an embodiment of this application provides a method for registering a terminal device. The method may be performed by a communication system. The communication system includes, for example, an access network element, a first mobility management network element in a first network, and a second mobility management network element in a second network. The method includes: The access network element receives a tenth message from a terminal device, where the tenth message includes a registration request message, the registration request is used to request registration of the terminal device, and the tenth message indicates an identifier of the second network. The access network element sends a sixth message to the first mobility management network element in the first network, where the sixth message is used to request to set up a communication connection between the access network element and the second mobility management network element in the second network, the sixth message includes an address of the second mobility management network element, and the address of the second mobility management network element is related to the identifier of the second network. The first mobility management network element sends the sixth message to the second mobility management network element. The second mobility management network element sends a seventh message to the first mobility management network element, where the seventh message indicates that the second mobility management network element accepts setup of the communication connection to the access network element. The first mobility management network element sends a connection setup response message to the access network element, where the connection setup response message indicates that the second mobility management network element accepts setup of the communication connection to the access network element.

In a possible implementation, the access network element sends an eighth message to the second mobility management network element, where the eighth message is used to request registration of the terminal device; and the second mobility management network element sends a ninth message to the access network element, where the ninth message indicates that registration of the terminal device is accepted.

Optionally, the first mobility management network element may further perform the method performed by the first mobility management network element in any one of the first aspect and the possible implementations, the second mobility management network element may further perform the method performed by the second mobility management network element in any one of the second aspect and the possible implementations, and the access network element may further perform the method performed by the access network element in any one of the third aspect and the possible implementations. Details are not described herein again.

According to a ninth aspect, an embodiment of this application provides a communication apparatus. The communication apparatus may be the first mobility management network element in the first aspect, or a software or hardware module (for example, a chip) having a function of the first mobility management network element. The communication apparatus includes a corresponding means (means) or module configured to perform the first aspect or any possible implementation. For example, the communication apparatus includes a processing module (sometimes also referred to as a processing unit) and a transceiver module (sometimes also referred to as a transceiver unit).

For example, the transceiver module is configured to: receive, under control of the processing module, a first message from an access network element, where the first message includes a registration request message, the registration request message is used to request registration of a terminal device, and the first message indicates an identifier of a second network; send a second message to a second mobility management network element in the second network based on the identifier of the second network, where the second message includes the registration request message; and receive a third message from the second mobility management network element, where the third message indicates that registration of the terminal device is accepted.

In a possible implementation, the processing module is further configured to determine, based on the identifier of the second network, that registration of the terminal device is allowed.

In a possible implementation, the first message further includes a first parameter, and one of the registration request message and the first parameter includes the identifier of the second network and/or an identifier of the terminal device; or when the first message further includes a first parameter, the first message further includes the identifier of the second network and/or an identifier of the terminal device, where the first parameter is used to assist in accessing the terminal device, and the identifier of the terminal device is used to determine the identifier of the second network.

In a possible implementation, when the first message further includes the first parameter, and the first parameter includes the identifier of the second network and/or the identifier of the terminal device, the first message indicates the first mobility management network element not to parse the registration request message; or when the first message further includes the first parameter, and the first message further includes the identifier of the second network and/or the identifier of the terminal device, the first message indicates the first mobility management network element not to parse the registration request message and the first parameter.

In a possible implementation, the second message includes a first connection identifier and/or the identifier of the terminal device, the third message includes a registration accept message, the third message further includes the first connection identifier and/or the identifier of the terminal device, the registration accept message indicates that registration of the terminal device is accepted, and the first connection identifier identifies a connection between the access network element and the first mobility management network element. The transceiver module is further configured to send the registration accept message to the terminal device via the access network element based on the first connection identifier and/or the identifier of the terminal device.

In a possible implementation, the processing module is specifically configured to: determine an address of the second mobility management network element based on the identifier of the second network; and send a fourth message to a security edge protection proxy in the second network, so that the security edge protection proxy in the second network sends the second message to the second mobility management network element, where the fourth message includes the address of the second mobility management network element and the registration request message.

In a possible implementation, the communication apparatus includes a storage module. The processing module can be coupled to the storage module, and execute a program or instructions in the storage module, to cause the communication apparatus to perform a function of the first mobility management network element.

According to a tenth aspect, an embodiment of this application provides a communication apparatus. The communication apparatus may be the second mobility management network element in the second aspect, or a software or hardware module (for example, a chip) having a function of the second mobility management network element. The communication apparatus includes a corresponding means (means) or module configured to perform the second aspect or any possible implementation. For example, the communication apparatus includes a processing module (sometimes also referred to as a processing unit) and a transceiver module (sometimes also referred to as a transceiver unit).

For example, the transceiver module receives, under control of the processing module, a second message from a first mobility management network element in a first network, where the second message includes a registration request message, and the registration request message is used to request registration of a terminal device; and sends a third message to the first mobility management network element, where the third message indicates that registration of the terminal device is accepted.

In a possible implementation, the second message and the third message each include a first connection identifier and/or an identifier of the terminal device, and the first connection identifier identifies a connection between an access network element and the first mobility management network element.

In a possible implementation, before sending the third message to the first mobility management network element, the transceiver module is further configured to perform at least one of the following: sending, to a unified data management network element in the second network, a message used to request to obtain subscription information of the terminal device, and receiving the subscription information of the terminal device from the unified data management network element in the second network; sending, to an authentication service network element in the second network, a message used to request to obtain authorization information of the terminal device, and receiving the authorization information of the terminal device from the authentication service network element in the second network; or sending, to a policy control network element in the second network, a message used to request to obtain access policy information of the terminal device, and receiving the access policy information of the terminal device from the policy control network element in the second network.

In a possible implementation, the second message further includes a first parameter, and one of the registration request message and the first parameter includes an identifier of the second network and/or the identifier of the terminal device, where the first parameter is used to assist in accessing the terminal device, and the identifier of the terminal device is used to determine the identifier of the second network.

In a possible implementation, the communication apparatus includes a storage module. The processing module can be coupled to the storage module, and execute a program or instructions in the storage module, to cause the communication apparatus to perform a function of the first mobility management network element.

According to an eleventh aspect, an embodiment of this application provides a communication apparatus. The communication apparatus may be the access network element in the third aspect, or a software or hardware module (for example, a chip) having a function of the access network element. The communication apparatus includes a corresponding means (means) or module configured to perform the third aspect or any possible implementation. For example, the communication apparatus includes a processing module (sometimes also referred to as a processing unit) and a transceiver module (sometimes also referred to as a transceiver unit).

For example, the transceiver module receives, under control of the processing module, a fifth message from a terminal device, where the fifth message includes a registration request message, the registration request message is used to request registration of the terminal device, the fifth message indicates an identifier of a second network, and the identifier of the second network is used to determine a second mobility management network element in the second network; send a first message to a first mobility management network element in a first network, where the first message includes the registration request message, and the first message indicates the identifier of the second network; and receive a registration accept message from the first mobility management network element, where the registration accept message indicates that the second mobility management network element accepts registration of the terminal device.

In a possible implementation, the fifth message further includes a second parameter, and one of the registration request message and the second parameter includes the identifier of the second network and/or an identifier of the terminal device, where the second parameter is used to assist in accessing the terminal device, and the identifier of the terminal device is used to determine the identifier of the second network.

In a possible implementation, the first message further includes a first parameter, and one of the registration request message and the first parameter includes the identifier of the second network and/or an identifier of the terminal device; or when the first message includes the registration request message and a first parameter, the first message further includes the identifier of the second network and/or the identifier of the terminal device, where the first parameter is used to assist in accessing the terminal device, and the identifier of the terminal device is used to determine the identifier of the second network.

In a possible implementation, when the first message further includes the first parameter, and the first parameter includes the identifier of the second network and/or the identifier of the terminal device, the first message indicates the first mobility management network element not to parse the registration request message; or when the first message further includes the first parameter, and the first message further includes the identifier of the second network and/or the identifier of the terminal device, the first message indicates the first mobility management network element not to parse the registration request message and the first parameter.

In a possible implementation, the processing module is further configured to determine, based on the identifier of the second network, that registration of the terminal device is allowed.

In a possible implementation, the communication apparatus includes a storage module. The processing module can be coupled to the storage module, and execute a program or instructions in the storage module, to cause the communication apparatus to perform a function of the first mobility management network element.

According to a twelfth aspect, an embodiment of this application provides a communication apparatus. The communication apparatus may be the first mobility management network element in the fourth aspect, or a software or hardware module (for example, a chip) having a function of the first mobility management network element. The communication apparatus includes a corresponding means (means) or module configured to perform the fourth aspect or any possible implementation. For example, the communication apparatus includes a processing module (sometimes also referred to as a processing unit) and a transceiver module (sometimes also referred to as a transceiver unit).

For example, the transceiver module receives, under control of the processing module, receiving a sixth message from an access network element, where the sixth message is used to request to set up a communication connection between the access network element and a second mobility management network element in a second network, and the sixth message includes an address of the second mobility management network element; sends the sixth message to the second mobility management network element; and receives a seventh message from the second mobility management network element, where the seventh message indicates that the second mobility management network element accepts setup of the communication connection to the access network element.

In a possible implementation, the sixth message includes an identifier of the second network and/or an identifier of the first network, and the identifier of the first network is used to determine the identifier of the second network.

In a possible implementation, the seventh message includes a connection setup response message and an address of the access network element, and the connection setup response message indicates that the second mobility management network element accepts setup of the communication connection to the access network element. The transceiver module is further configured to send the connection setup response message to the access network element based on the address of the access network element.

In a possible implementation, the communication apparatus includes a storage module. The processing module can be coupled to the storage module, and execute a program or instructions in the storage module, to cause the communication apparatus to perform a function of the first mobility management network element.

According to a thirteenth aspect, an embodiment of this application provides a communication apparatus. The communication apparatus may be the second mobility management network element in the fifth aspect, or a software or hardware module (for example, a chip) having a function of the second mobility management network element. The communication apparatus includes a corresponding means (means) or module configured to perform the fifth aspect or any possible implementation. For example, the communication apparatus includes a processing module (sometimes also referred to as a processing unit) and a transceiver module (sometimes also referred to as a transceiver unit).

For example, the transceiver module receives, under control of the processing module, a sixth message from a first mobility management network element in a first network, where the sixth message is used to request to set up a communication connection between an access network element and the second mobility management network element in the second network; and sends a seventh message to the first mobility management network element, where the seventh message indicates that the second mobility management network element accepts setup of the communication connection to the access network element.

In a possible implementation, the transceiver module is further configured to: after sending the seventh message to the first mobility management network element in the first network, receive an eighth message from the access network element, where the eighth message is used to request registration of a terminal device; and send a ninth message to the access network element, where the ninth message indicates that registration of the terminal device is accepted.

In a possible implementation, the transceiver module is further configured to: before sending the seventh message to the first mobility management network element in the first network, perform at least one of the following: sending, to a unified data management network element in the second network, a message used to request to obtain subscription information of the terminal device, and receiving the subscription information of the terminal device from the unified data management network element in the second network; sending, to an authentication service network element in the second network, a message used to request to obtain authorization information of the terminal device, and receiving the authorization information of the terminal device from the authentication service network element in the second network; or sending, to a policy control network element in the second network, a message used to request to obtain access policy information of the terminal device, and receiving the access policy information of the terminal device from the policy control network element in the second network.

In a possible implementation, the seventh message includes an identifier of the second network and/or an identifier of the first network, and the identifier of the first network is used to determine the identifier of the second network. The transceiver module is further configured to: determine, based on the identifier of the second network and/or the identifier of the first network, that setup of the communication connection to the access network element is accepted.

In a possible implementation, the communication apparatus includes a storage module. The processing module can be coupled to the storage module, and execute a program or instructions in the storage module, to cause the communication apparatus to perform a function of the first mobility management network element.

According to a fourteenth aspect, an embodiment of this application provides a communication apparatus. The communication apparatus may be the access network element in the sixth aspect, or a software or hardware module (for example, a chip) having a function of the access network element. The communication apparatus includes a corresponding means (means) or module configured to perform the sixth aspect or any possible implementation. For example, the communication apparatus includes a processing module (sometimes also referred to as a processing unit) and a transceiver module (sometimes also referred to as a transceiver unit).

For example, the transceiver module receives, under control of the processing module, a tenth message from a terminal device, where the tenth message includes a registration request message, the registration request is used to request registration of the terminal device, and the tenth message indicates an identifier of a second network; sends a sixth message to a first mobility management network element in a first network, where the sixth message is used to request to set up a communication connection between the access network element and a second mobility management network element in the second network, the sixth message includes an address of the second mobility management network element, and the address of the second mobility management network element is related to the identifier of the second network; and receives a connection setup response message from the first mobility management network element, where the connection setup response message indicates that the second mobility management network element accepts setup of the communication connection to the access network element.

In a possible implementation, the tenth message further includes a second parameter, and one of the registration request message and the second parameter includes the identifier of the second network and/or an identifier of the terminal device, where the second parameter is used to assist in accessing the terminal device, and the identifier of the terminal device is used to determine the identifier of the second network.

In a possible implementation, the transceiver module is further configured to: after receiving the connection setup response message from the first mobility management network element, send an eighth message to the second mobility management network element, where the eighth message is used to request registration of the terminal device; and receive a ninth message from the second mobility management network element, where the ninth message indicates that registration of the terminal device is accepted.

In a possible implementation, the transceiver module is further configured to determine, based on the identifier of the second network, that registration of the terminal device is allowed.

In a possible implementation, the communication apparatus includes a storage module. The processing module can be coupled to the storage module, and execute a program or instructions in the storage module, to cause the communication apparatus to perform a function of the first mobility management network element.

According to a fifteenth aspect, an embodiment of this application provides a communication system. The communication system includes the communication apparatus according to the ninth aspect and any one of the possible implementations and the communication apparatus according to the tenth aspect and any one of the possible implementations. Optionally, the communication system further includes the communication apparatus according to the eleventh aspect and any one of the possible implementations.

According to a sixteenth aspect, an embodiment of this application provides a communication system. The communication system includes the communication apparatus according to the twelfth aspect and any one of the possible implementations, the communication apparatus according to the thirteenth aspect and any one of the possible implementations, and the communication apparatus according to the fourteenth aspect and any one of the possible implementations.

According to a seventeenth aspect, an embodiment of this application provides a communication apparatus, including a processor and a communication interface. The communication interface is configured to: receive a signal from another apparatus other than the communication apparatus and transmit the signal to the processor or send a signal from the processor to the another apparatus other than the communication apparatus. The processor executes code instructions through a logic circuit to implement the method according to the first aspect to the sixth aspect and any one of the possible implementations.

Optionally, the communication apparatus further includes other components, for example, an antenna, an input/output module, and an interface. These components may be hardware, software, or a combination of software and hardware.

According to an eighteenth aspect, an embodiment of this application provides a communication apparatus, including a processor and a memory. The memory is configured to store one or more computer programs, and the one or more computer programs include computer-executable instructions. When the communication apparatus runs, the processor executes the one or more computer programs stored in the memory, to cause the communication apparatus to perform the method according to the first aspect to the sixth aspect and any one of the possible implementations.

Optionally, the communication apparatus further includes other components, for example, an antenna, an input/output module, and an interface. These components may be hardware, software, or a combination of software and hardware.

According to a nineteenth aspect, an embodiment of this application provides a chip system. The chip system includes a processor and an interface. The processor is configured to: invoke instructions from the interface and run the instructions. When the processor executes the instructions, the method according to the first aspect to the sixth aspect and any one of the possible implementations is implemented.

According to a twentieth aspect, an embodiment of this application provides a computer-readable storage medium. The computer-readable storage medium is configured to store a computer program or instructions. When the computer program or the instructions are run, the method according to the first aspect to the sixth aspect and any one of the possible implementations is implemented.

According to a twenty-first aspect, an embodiment of this application provides a computer program product including instructions. When the computer program product runs on a computer, the method according to the first aspect to the sixth aspect and any one of the possible implementations is implemented.

For beneficial effects of the second aspect, the third aspect, and the fifth aspect to the twenty-first aspect, refer to the beneficial effects described in the first aspect and the fourth aspect. Details are not described herein again.

### BRIEF DESCRIPTION OF DRAWINGS

FIG. 1 is a diagram of a scenario to which an embodiment of this application is applicable;
FIG. 2 is a diagram of another scenario to which an embodiment of this application is applicable;
FIG. 3 is a diagram of still another scenario to which an embodiment of this application is applicable;
FIG. 4 is a diagram of still another scenario according to an embodiment of this application;
FIG. 5 to FIG. 10 are diagrams of several methods for registering a terminal device according to an embodiment of this application;
FIG. 11 is a diagram of a structure of a communication apparatus according to an embodiment of this application; and
FIG. 12 is a diagram of a structure of another communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding by a person skilled in the art.

1. A terminal device is a device having a wireless transceiver function, and may be a fixed device, a mobile device, a handheld device, a wearable device, a vehicle-mounted device, or a wireless apparatus (for example, a communication module or a chip system) disposed in the foregoing device. The terminal device is configured to connect a person, an object, a machine, and the like, and may be widely used in various scenarios, for example, including but not limited to the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), remote medical (remote medical), a smart grid (smart grid), smart furniture, a smart office, a smart wearable, smart transportation, a smart city (smart city), an uncrewed aerial vehicle, a robot, and the like. The terminal device may be sometimes referred to as user equipment (user equipment, UE), a terminal, an access station, a UE station, a remote station, a wireless communication device, a user apparatus, or the like.

A network device includes, for example, an access network element (or referred to as an access network device) and/or a core network (core network, CN) element (or referred to as a core network device).

2. An access network element is a device having a wireless transceiver function, and is configured to communicate with a terminal device. For example, the access network element is also a radio access network (radio access network, RAN) element. The access network element includes but is not limited to a base station (BTS, NodeB, eNodeB/eNB, or gNodeB/gNB) in the foregoing communication system, a transmission reception point (transmission reception point, TRP), a base station evolved in a subsequent 3GPP, an access node in a wireless fidelity (wireless fidelity, Wi-Fi) system, a radio relay node, a wireless backhaul node, a satellite, an uncrewed aerial vehicle, or the like. The base station may be a macro base station, a micro base station, a picocell base station, a small cell, a relay station, or the like. A plurality of base stations may support networks of a same access technology mentioned above, or may support networks of different access technologies mentioned above. The base station may include one or more co-site or non-co-site transmission reception points. Alternatively, the access network element may be a radio controller, a CU, and/or a DU in a cloud radio access network (cloud radio access network, C(R)AN) scenario. The network device may further be a server, a wearable device, a vehicle-mounted device, or the like. For example, an access network element in a vehicle-to-everything (vehicle-to-everything, V2X) technology may be a road side unit (road side unit, RSU). The following uses an example in which the access network element is a base station for description. A plurality of access network elements in the communication system may be base stations of a same type, or may be base stations of different types. The base station may communicate with the terminal device, or may communicate with the terminal device via a relay station. The terminal device may communicate with a plurality of base stations using different access technologies.

The core network element is configured to implement at least one of functions such as mobility management, data processing, session management, and policy and charging. Names of devices that implement core network functions in systems using the different access technologies may be different. This is not limited in embodiments of this application. A 5G system is used as an example. The core network element includes an AMF, a session management function (session management function, SMF), a policy control function (policy control function, PCF), a user plane function (user plane function, UPF), or the like.

3. A network element may be a single device, or may be a device integrating a plurality of devices, or may be a logical concept. The network element is, for example, a software module, or a network function corresponding to a service provided by each network element. The network function may be understood as a virtualized function in a virtualization implementation, or may be understood as a network function providing a service in a service-based network, for example, an SMF or an AMF. This is not specifically limited in embodiments of this application.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including a single item (piece) or any combination of a plurality of items (pieces). For example, at least one item (piece) of a, b, or c indicates a, b, c, a and b, a and c, b and c, or a, b, and c, where a, b, and c may be singular or plural.

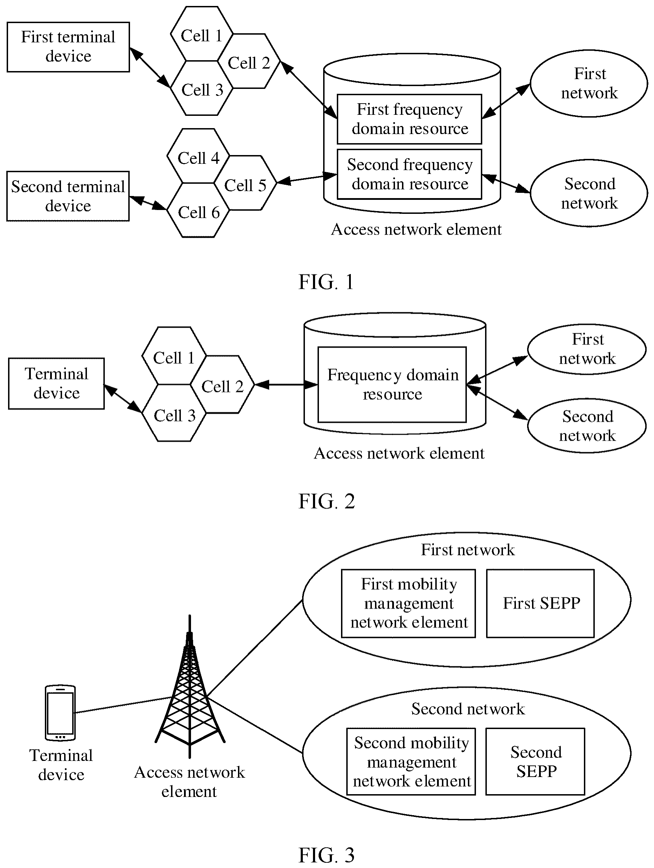

FIG. 1 is a diagram of a scenario to which an embodiment of this application is applicable. Alternatively, FIG. 1 may be considered as a diagram of a network structure of access network sharing. For example, FIG. 1 may be specifically considered as a diagram of a network structure of independent carrier access network sharing (RAN sharing). Alternatively, FIG. 1 may be considered as a diagram of a structure of a communication system.

As shown in FIG. 1, the scenario includes terminal devices (for example, a first terminal device and a second terminal device), an access network, and a first network and a second network that share the access network. Because the access network is shared between the first network and the second network, the access network may also be referred to as a shared access network. For example, both the first network and the second network are core networks (core networks, CN). In this case, the first network may also be referred to as a first core network, and the second network may also be referred to as a second core network. The first network and the second network may belong to different operators. In the scenario shown in FIG. 1, different networks share the access network, but do not share a frequency domain resource of the access network. For example, the first network uses a first frequency domain resource of the access network, and the second network uses a second frequency domain resource of the access network.

The access network may determine, based on a cell on which the terminal device is currently camped, a network that provides a service for the terminal device. For example, when determining that the first terminal device is camped on a cell 1, a cell 2, or a cell 3, the access network may determine that a network that provides a service for the first terminal device is the first network. For another example, when determining that the second terminal device is camped on a cell 4, a cell 5, or a cell 6, the access network may determine that a network that provides a service for the second terminal device is the second network.

FIG. 2 is a diagram of another scenario to which an embodiment of this application is applicable. Alternatively, FIG. 2 may be considered as a diagram of another network structure of access network sharing. For example, FIG. 2 may be specifically considered as a multi-operator core network (multi-operator core network, MOCN). The MOCN enables a plurality of operators to share a frequency domain resource of the access network. Alternatively, FIG. 2 may be considered as a diagram of a structure of a communication system.

As shown in FIG. 2, the scenario includes a terminal device, an access network, and a first network and a second network that share the access network. For example, both the first network and the second network are core networks. In the scenario shown in FIG. 2, different networks may share a frequency domain resource of the access network. For example, the first network and the second network share a same frequency domain resource.

The access network may determine, based on an operator of the terminal device, a network that provides a service for the terminal device. For example, the access network may determine, based on an international mobile subscriber identity (international mobile subscriber identity, IMSI) or a temporary mobile subscriber identity (temporary mobile subscriber identity, TMSI) of the terminal device, the operator corresponding to the terminal device.

Currently, in an access network sharing solution, a physical connection needs to exist between an access network and a network sharing the access network. In this way, a plurality of networks can implement access network sharing. For example, FIG. 1 or FIG. 2 is used as an example. A physical connection needs to exist between the access network and the first network and between the access network and the second network. If there is no physical connection between the access network and the second network, a direct physical connection (for example, an optical fiber connection) needs to be deployed between the access network and the second network. In this way, the first network and the second network can implement the access network sharing, resulting in high costs of a shared access network.

In view of this, an embodiment of this application provides a method for registering a terminal device. In the method, an access network element may request a first mobility management network element in a network (for example, a first network) to register a terminal device with the network; the first mobility management network element discovers a second mobility management network element in another network (for example, a second network), where a direct physical connection exists between the first network and the second network; and the second mobility management network element may register the terminal device with the second network. In this way, even if there is no direct physical connection between the access network element and the second network, the second mobility management network element may register the terminal device with the second network, without necessity to separately deploy a direct physical connection between the access network element and the second network. This reduces costs of implementing access network sharing. In addition, the second mobility management network element registering the terminal device simplifies a procedure of registering the terminal device with a network, reduces signaling interaction between the first network and the second network in a process of registering the terminal device, and improves registration efficiency of the terminal device.

Embodiments of this application are applicable to a scenario in which a terminal device is registered, to implement access network sharing. A type of the registered terminal device includes but is not limited to initial registration (initial registration), mobility registration update (mobility registration update), periodic registration update (periodic registration update), emergency registration (emergency registration), or the like performed on the terminal device. This is not limited in this embodiment of this application.

FIG. 3 is a diagram of still another scenario to which an embodiment of this application is applicable. Alternatively, FIG. 3 may be considered as a diagram of a structure of a communication system.

As shown in FIG. 3, the scenario includes a terminal device, an access network element, a first network, and a second network. The first network is, for example, a visited public land mobile network (visited public land mobile network, VPLMN/vPLMN) of the terminal device, and the second network is, for example, a home public land mobile network (home public land mobile network, HPLMN/hPLMN) of the terminal device. The visited public land mobile network may also be referred to as a visited (or visited) public land mobile network or a visited network, and the home public land mobile network may also be referred to as a home public land mobile network or a home network. Both the first network and the second network may provide services for the terminal device via the access network element. For example, both the first network and the second network are core networks.

The first network may include, for example, a first mobility management network element and a first security edge protection proxy (security edge protection proxy, SEPP). The second network may include, for example, a second mobility management network element and a second SEPP. The mobility management network element is, for example, an AMF or an MME. This is not limited in embodiments of this application.

A mobility management network element is responsible for an access and mobility management function. For example, the first mobility management network element is responsible for an access and mobility management function in the first network, and the second mobility management network element is responsible for an access and mobility management function in the second network. An SEPP is responsible for centralized and secure forwarding of signaling between a network and another network. All signaling across a public land mobile network (public land mobile network) can be forwarded via the SEPP. The SEPP further has a topology hiding function, and can hide a fully qualified domain name (fully qualified domain name, FQDN) of a network element in the network. For example, the first SEPP is responsible for centralized and secure forwarding of signaling between the first network and another network (for example, the second network), and the second SEPP is responsible for centralized and secure forwarding of signaling between the second network and another network (for example, the first network).

In a possible implementation, there is a direct physical connection between the second network and the first network, but there may be no direct physical connection between the second network and the access network element.

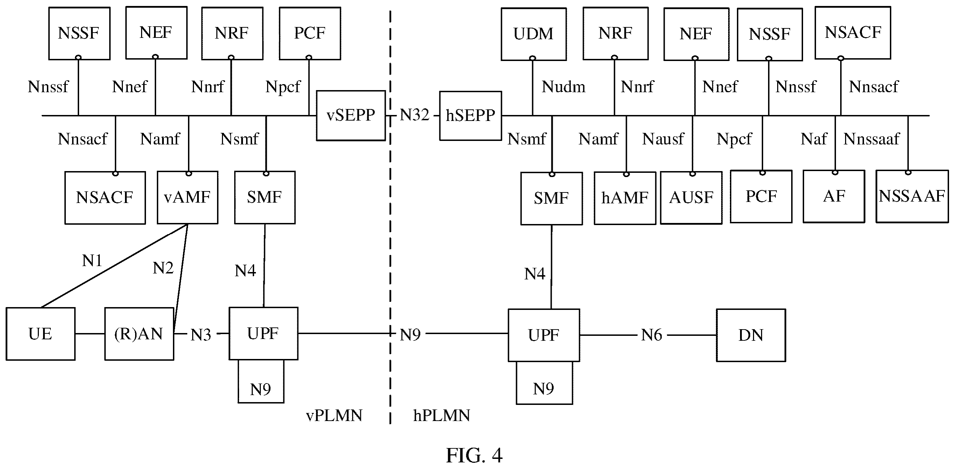

FIG. 4 is a diagram of still another scenario to which an embodiment of this application is applicable. Alternatively, FIG. 4 may be considered as a diagram of a structure of a communication system. Alternatively, FIG. 4 may be considered as a diagram of a roaming architecture, for example, a diagram of a home routing (home routed, HR) roaming architecture.

In FIG. 4, the first network in FIG. 3 is a vPLMN, the second network is an hPLMN, a first AMF is an AMF in the vPLMN (which may be referred to as a visited AMF, a vAMF, or a VAMF), a second AMF is an AMF in the hPLMN (which may be referred to as a home AMF, an hAMF, or an HAMF), the first SEPP is an SEPP in the vPLMN (which may be referred to as a visited SEPP, a vSEPP, or a VSEPP), the second SEPP is a SEPP in the hPLMN (which may be referred to as a home SEPP, an hSEPP, or an HSEPP), and the terminal device is UE.

As shown in FIG. 4, the vPLMN and the hPLMN may communicate with each other via the vSEPP and the hSEPP.

The vPLMN include the vAMF and the vSEPP. Optionally, the hPLMN may further include a network slice selection function (network slice selection function, NSSF), a network exposure function (network exposure function, NEF), a network repository function (network repository function, NRF), a PCF, a network slice admission control function (network slice admission control function, NSACF), an SMF, a UPF, and the like.

In the vPLMN, the UE accesses a network via a (R)AN network element, the UE may communicate with the vAMF through an N1 interface (N1 for short), the (R)AN network element communicates with the vAMF through an N2 interface (N2 for short), the (R)AN network element communicates with the UPF in the vPLMN through an N3 interface (N3 for short), the SMF in the vPLMN communicates with the UPF in the vPLMN through an N4 interface (N4 for short), and UPFs in the vPLMN may communicate with each other through an N9 interface (N9 for short).

In addition, the NSSF, the NEF, the NRF, the PCF, the NSACF, the AMF, and the SMF in the vPLMN may interact with each other through service-based interfaces. For example, a service-based interface exhibited by the NSSF is Nnssf, a service-based interface exhibited by the NEF is Nnef, a service-based interface exhibited by the NRF is Nnrf, a service-based interface exhibited by the PCF is Npcf, a service-based interface exhibited by the NSACF is Nnsacf, a service-based interface exhibited by the AMF is Namf, a service-based interface exhibited by the SMF is Nsmf.

The hPLMN includes the hAMF and the hSEPP. Optionally, the hPLMN may further include a unified data management (unified data management, UDM) function, an NRF, an NEF, an NSSF, an NSACF, an SMF, an hAMF, an authentication server function (authentication server function, AUSF), a PCF, an application function (application function, AF), a network slice-specific authentication and authorization function (network slice-specific authentication and authorization function, NSSAAF), and the like.

In the hPLMN, the SMF in the hPLMN communicates with an UPF in the hPLMN through an N4 interface, UPFs in the hPLMN can communicate with each other through an N9 interface, the UPF in the hPLMN can also communicate with the UPF in the vPLMN through the N9 interface, the UPF in the hPLMN can also access a data network (data network, DN) through an N6 interface (N6 for short).

In addition, the UDM, the NRF, the NEF, the NSSF, the NSACF, the SMF, an AMF, the AUSF, the PCF, the AF, and the NSSAAF in the hPLMN may interact with each other through service-based interfaces. For example, a service-based interface exhibited the UDM is Nudm, a service-based interface exhibited the NRF is Nnrf, a service-based interface exhibited by the NEF is Nnef, a service-based interface exhibited by the NSSF is Nnssf, a service-based interface exhibited by the NSACF is Nnsacf, a service-based interface exhibited by the SMF is Nsmf, a service-based interface exhibited by the AMF is Namf, a service-based interface exhibited by the AUSF is Nausf, a service-based interface exhibited by the PCF is Npcf, a service-based interface exhibited by the AF is Naf, and a service-based interface exhibited by the NSSAAF is Nnssaaf.

The following describes functions of the network elements in FIG. 4.
1. The AMF provides an access and mobility management function, including subscriber registration, reachability, mobility management, N1/N2 interface signaling transmission, and access authentication and authorization, and the like.
   For example, the vAMF is responsible for an access and mobility management function in the vPLMN, and the hAMF provides an access and mobility management function in the HPLMN.
2. The SEPP is responsible for centralized and secure forwarding of signaling between a network and another network.
   For example, the vSEPP is responsible for centralized and secure forwarding of signaling between the vPLMN and another network (such as the hPLMN), and the hSEPP is responsible for centralized and secure forwarding of signaling between the hPLMN and another network (such as the vPLMN).
3. The NSSF is responsible for determining, for the UE, a network slice for service provision.
   For example, the NSSF in the vPLMN determines, for UE accessing the vPLMN, a network slice that provides a service, and the NSSF in the hPLMN determines, for UE accessing the hPLMN, a network slice that provides a service.
4. The NEF is responsible for exhibiting network data.
   For example, the NEF in the vPLMN provides, for the VPLMN, a function of developing network data, and the NEF in the hPLMN provides, for the hPLMN, a function of developing network data.
5. The NRF is responsible for network function registration, storage, and management.
   For example, the NRF in the vPLMN is responsible for network function registration, storage, and management in the vPLMN, and the NRF in the hPLMN is responsible for network function registration, storage, and management in the hPLMN.
6. The PCF provides policy control functions, including policy control functions such as charging for a session or a service flow level, QoS bandwidth guarantee, mobility policy management, and terminal device access policy.
   For example, the PCF in the hPLMN provides a policy control function in the hPLMN.
7. The NSACF is responsible for controlling a quantity of terminal devices registered with each network slice and a quantity of sessions corresponding to each network slice.
   For example, the NSACF in the vPLMN may be used to control a quantity of terminal devices registered with a network slice and a quantity of sessions corresponding to each network slice in the vPLMN.
8. The SMF is used to implement session management, including functions such as session management (for example, session establishment, modification, and release) on a UE session, execution of a control policy delivered by the PCF, UPF selection and control, and internet protocol (internet protocol, IP) address allocation of the terminal device.
   For example, the SMF in the vPLMN is responsible for session management in the vPLMN, and the SMF in the hPLMN is responsible for session management in the hPLMN.
9. The UPF provides user plane functions of a core network, including user plane functions such as user packet forwarding and processing, connection to a DN, session anchor, and QoS policy enforcement.
   For example, the UPF in the vPLMN provides a user plane function of a core network in the vPLMN, and the SMF in the hPLMN provides a user plane function of a core network in the hPLMN.
10. The UDM provides unified data management functions, including subscription management, access authorization, and authentication information generation for users.
   For example, the UDM in the hPLMN provides a unified data management function in the hPLMN.
11. The AUSF provides an authentication server function.
   For example, the AUSF in the hPLMN provides an authentication server function in the hPLMN.
12. The AF provides services at an application layer.
   For example, the AF in the hPLMN provides services at an application layer in the hPLMN.
13. The NSSAAF is responsible for authenticating and authorizing a network slice.

For example, the NSSAAF in the hPLMN is responsible for authentication and authorization of a network slice in the hPLMN.

The following describes a method provided in embodiments of this application with reference to the accompanying drawings. In the accompanying drawings corresponding to embodiments of this application, all steps represented by using dashed lines are optional steps. A first network in embodiments of this application is, for example, the first network in FIG. 1, FIG. 2, or FIG. 3, or the vPLMN in FIG. 4. A second network in embodiments of this application is, for example, the second network in FIG. 1, FIG. 2, or FIG. 3, or the hPLMN in FIG. 4.

A RAN in embodiments of this application is, for example, a network element in the access network in FIG. 1 or FIG. 2, or the access network element in FIG. 3, or the RAN in FIG. 4. A terminal device in embodiments of this application is, for example, the first terminal device or the second terminal device in FIG. 1, or the UE in FIG. 2, FIG. 3, or FIG. 4. A first AMF in embodiments of this application is, for example, the first AMF in FIG. 3 or the vAMF in FIG. 4. A second AMF in embodiments of this application is, for example, the second AMF in FIG. 3 or the hAMF in FIG. 4. A first SEPP in embodiments of this application is, for example, the first SEPP in FIG. 3 or the vSEPP in FIG. 4. A second SEPP in embodiments of this application is, for example, the second SEPP in FIG. 3 or the hSEPP in FIG. 4. In addition, a RAN in embodiments of this application may be replaced with a radio access network or an access network element; an AMF in embodiments of this application may be replaced with a mobility management network element or an access and mobility management network element; and an SEPP in embodiments of this application may be replaced with a security edge protection proxy or the like. It should be understood that, with continuous evolution of standards, names, functions, and/or the like of network elements in embodiments of this application may change. This is not limited in embodiments of this application.

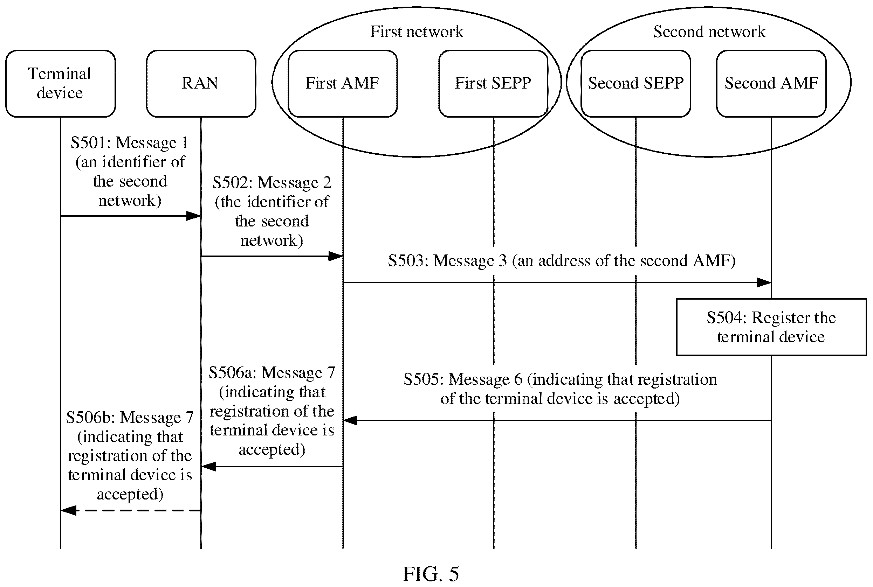

FIG. 5 is a diagram of a method for registering a terminal device with a network according to an embodiment of this application.

S501: A terminal device sends a message 1 to a RAN, and correspondingly the RAN receives the message 1 from the terminal device. The message 1 may also be referred to as a fifth message.

The message 1 may indicate an identifier (identifier, ID) of a second network. The second network may be considered as a target network with which the terminal device requests to be registered. The message 1 may include a registration request (registration request) message. The registration request message is used to request registration of the terminal device, or may be understood as being used to request registration of the terminal device with a network (for example, the second network). The registration request message is a non-access stratum (non-access stratum, NAS) message. The registration request message may indicate the following information shown in A1 and/or A2.

### A1. Identifier of the second network

For example, the registration request message includes the identifier of the second network and/or an identifier of the terminal device. The identifier of the second network is, for example, a PLMN ID of the second network. The PLMN ID may include, for example, mobile country code (mobile country code, MCC) and mobile network code (mobile network code, MNC).

For example, the registration request message includes N bits, where N is a positive integer. The N bits carry the identifier of the second network. Alternatively, the registration request message includes M bits, and the M bits carry the identifier of the terminal device, where M is a positive integer. The identifier of the terminal device may be used to determine the identifier of the second network. In this way, the message 1 indirectly indicates the identifier of the second network.

The identifier of the terminal device is, for example, a subscription permanent identifier (subscription permanent identifier, SUPI), a subscription concealed identifier (subscription concealed identifier, SUCI), a 5^{th} generation globally unique temporary identifier (5^{th} generation globally unique temporary identifier, 5G-GUTI), a 5G-TMSI, or a permanent equipment identifier (permanent equipment identifier, PEI). Optionally, the SUPI sequentially includes, for example, MCC, MNC, and a mobile subscription identification number (mobile subscription identification number, MSIN). The SUCI may be obtained by encrypting the SUPI.

### A2. Registration type

The registration type indicates a registration type of the terminal device. The registration type includes, for example, initial registration, mobility registration update, periodic registration update, or emergency registration.

In addition to the registration request message, the message 1 may include a second parameter (parameter). The second parameter may also be referred to as an AN parameter. The second parameter may indicate the identifier of the second network. For a manner in which the second parameter indicates the identifier of the second network, refer to the foregoing content in which the registration request message indicates the identifier of the second network. Details are not described herein again.

In this case, the identifier of the second network may be indicated by the second parameter in the message 1. Alternatively, the identifier of the second network may be indicated by the registration request message in the message 1. In other words, at least one of the registration request message and the second parameter in the message 1 indicates the identifier of the second network.

For example, the registration request message in the message 1 includes the identifier of the second network and/or the identifier of the terminal device. Alternatively, the second parameter in the message 1 includes the identifier of the second network and/or the identifier of the terminal device. Alternatively, the registration request message and the second parameter in the message 1 each include the identifier of the second network and/or the identifier of the terminal device.

The second parameter may be used to assist in accessing the terminal device, or may be described as assisting the terminal device in accessing a network. Accessing the terminal device may include separately establishing, by the terminal device, communication with the RAN and an AMF. The second parameter indicates, for example, second access information of the terminal device. The second access information is used to assist in accessing the terminal device. The second access information may indicate at least one of the following information shown in B1 to B4.

### B1. Identifier of a first AMF

The identifier of the first AMF may be, for example, a 5^{th} generation system temporary mobile subscriber identity (5^{th} generation system TMSI, 5G-S-TMSI), and the 5G-S-TMSI may identify the AMF and the terminal device. For example, the 5G-S-TMSI may be determined based on an AMF set (set) ID, an AMF pointer (pointer), and a 5G-TMSI. The AMF set ID uniquely indicates one AMF set, and the AMF pointer identifies one or more AMFs in the AMF set. In other words, the AMF set ID and the AMF pointer may jointly identify the AMF. Alternatively, the identifier of the first AMF is, for example, a globally unique AMF identifier (globally unique AMF identifier, GUAMI).

B2. Identifier of a network selected by the terminal device. For brevity, the network selected by the terminal device may also be referred to as a selected network below, and the selected network may be, for example, a first network and/or the second network.

The following describes a manner in which the terminal device determines the identifier of the selected network.

In a possible implementation, the RAN may broadcast an identifier of at least one network, and the terminal device may determine, from the identifier of the at least one network broadcast by the RAN, the identifier of the selected network.

For example, an identifier of the first network includes a first identifier and a second identifier. The first identifier is used to access the first network, and the first identifier may also be considered as an original identifier of the first network. The second identifier is used to access another network through the first network, and the second identifier may also be considered as a dedicated (or added) identifier of the first network. The identifier of the second network may include a third identifier, and the third identifier is used to access the second network. The identifier of the network is, for example, a network number of the network, and the network number may be, for example, a PLMN ID.

For example, the identifier of the at least one network broadcast by the RAN includes a first identifier, and the terminal device may use the first identifier as an identifier for determining the selected network. Alternatively, the identifier of the at least one network broadcast by the RAN includes a second identifier, and the terminal device may use the second identifier as an identifier for determining the selected network. Alternatively, the identifier of the at least one network broadcast by the RAN includes a third identifier, and the terminal device may use the third identifier as an identifier for determining the selected network. Alternatively, the identifier of the at least one network broadcast by the RAN includes a first identifier, a second identifier, and a third identifier, and the terminal device may use the second identifier or the third identifier as an identifier for determining the selected network.

For example, the first identifier is 123000, the second identifier is 123022, and the third identifier is 123006. The identifier of the at least one network broadcast by the RAN includes 123000 and 123022, and the terminal device may use 123022 as an identifier of the selected network. For another example, the identifier of the at least one network broadcast by the RAN includes 123000 and 123006, and the terminal device may use 123006 as an identifier of the selected network. For another example, the identifier of the at least one network broadcast by the RAN includes 123000, 123022, and 123006, and the terminal device may use 123022 or 123006 as an identifier of the selected network. For another example, the identifier of the at least one network broadcast by the RAN includes 123000, and the terminal device may use 123000 as an identifier of the selected network.

### B3. Slice information of the terminal device

The slice information of the terminal device may be, for example, information about a slice that the terminal device expects to access, and/or information about a slice that the terminal device currently accesses.

B4. Cause (establishment cause) value for requesting, by the terminal device, to establish a connection to the RAN The cause value may indicate a cause for requesting, by the terminal device, to establish the connection to the RAN.

After S501 is performed, the RAN may further determine the identifier of the second network based on the message 1, and determine, based on the identifier of the second network, that registration of the terminal device is allowed. That registration of the terminal device is allowed may be described as that the terminal device is a terminal device that is allowed to access a different network (for example, the second network), or may be described as that a user corresponding to the terminal device is a user who is allowed to access a different network (for example, the second network).

For example, if the RAN may determine, based on the identifier of the second network, that the second network is a network that may perform service interaction with the first network, the RAN determines that registration of the terminal device is allowed. If the RAN determines, based on the identifier of the second network, that the second network is not a network that may perform service interaction with the first network, the RAN determines that registration of the terminal device is rejected (or not allowed), and may send, to the terminal device, a message indicating that registration of the terminal device is rejected.

For example, the RAN may pre-store an identifier of at least one network that is allowed to perform service interaction with the first network. If the identifier of the second network belongs to the identifier of the at least one network, the RAN determines that registration of the terminal device is allowed. If the identifier of the second network is not the identifier of the at least one network, the RAN determines that registration of the terminal device is not allowed.

S502: The RAN sends a message 2 to the first AMF, and correspondingly the first AMF receives the message 2 from the RAN. The message 2 may also be referred to as a first message. The message 2 may indicate the identifier of the second network.

There may be a plurality of forms of the message 2. For example, the form of the message 2 is an N2 message (message). The message 2 may include the registration request message, and the RAN may obtain the message 2 based on the registration request message without parsing the registration request message in the message 1. This helps reduce processing amounts of the RAN.

The message 2 may be any one of the following shown in C1 to C12, which are separately described below.

C1. The message 2 includes the registration request message, and the registration request message includes the identifier of the second network.

C2. The message 2 includes the registration request message, and the registration request message includes the identifier of the terminal device.

C3. The message 2 includes the registration request message, and the registration request message includes the identifier of the second network and the identifier of the terminal device.

C4. The message 2 includes the registration request message and a first parameter. The registration request message includes the identifier of the second network, and the first parameter is used to assist in accessing the terminal device. For a meaning of accessing the terminal device, refer to the foregoing descriptions.

The first parameter may indicate, for example, first access information. The first access information may be specifically used to assist in accessing the terminal device. The first parameter may include at least one of the identifier of the selected network, a camped-on cell identifier of the terminal device, a context (context) request of the terminal device, and a cause value for requesting, by the terminal device, to establish a connection to the RAN.

The camped-on cell identifier indicates a cell on which the terminal device is camped. For example, the context request indicates that terminal device context including security information needs to be established in the RAN. For content of the identifier of the selected network and the cause value, refer to the foregoing content.

C5. The message 2 includes the registration request message and a first parameter. The registration request message includes the identifier of the terminal device, and the first parameter indicates first access information.

C6. The message 2 includes the registration request message and a first parameter. The registration request message includes the identifier of the terminal device and the identifier of the second network, and the first parameter indicates first access information.

C7. The message 2 includes the registration request message and a first parameter. The first parameter includes first access information and the identifier of the second network. In this case, the message 2 may further indicate not to parse the registration request message.

For example, the RAN may send the message 2 by using a new elementary procedure (elementary procedure, EP), and then the first AMF determines, based on the EP, that the registration request message in the message 2 does not need to be parsed. The new EP may be understood as a communication protocol between the RAN and the first AMF. In this case, that the RAN sends the message 2 by using the new EP means that the message 2 indicates not to parse the registration request message in the message 2.

Optionally, the registration request message in the message 2 may also include the identifier of the terminal device and/or the identifier of the second network. Alternatively, the registration request message in the message 2 may not include the identifier of the terminal device and the identifier of the second network.

C8. The message 2 includes the registration request message and a first parameter. The first parameter includes first access information and the identifier of the terminal device. In this case, the message 2 may further indicate not to parse the registration request message. For a manner in which the message 2 may further indicate not to parse the registration request message, refer to the foregoing content.

In the message 2 shown in C8, the registration request message in the message 2 may also include the identifier of the terminal device and/or the identifier of the second network. Alternatively, the registration request message in the message 2 may not include the identifier of the terminal device and the identifier of the second network.

C9. The message 2 includes the registration request message and a first parameter. The first parameter includes first access information, the identifier of the terminal device, and the identifier of the second network. In this case, the message 2 may further indicate not to parse the registration request message. For a manner in which the message 2 further indicates not to parse the registration request message, refer to the foregoing content.

In the message 2 shown in C9, the registration request message in the message 2 may also include the identifier of the terminal device and/or the identifier of the second network. Alternatively, the registration request message in the message 2 may not include the identifier of the terminal device and the identifier of the second network.

C10. The message 2 includes the registration request message, a first parameter, and the identifier of the second network. In this case, the identifier of the second network is carried in content other than the registration request message and the first parameter in the message 2. In this case, the message 2 may further indicate not to parse the registration request message and the first parameter.

For example, after the RAN sends the message 2 by using a new EP, the first AMF determines, based on the EP, that the registration request message and the first parameter in the message 2 do not need to be parsed. In this case, that the RAN sends the message 2 by using the new EP means that the message 2 indicates not to parse the registration request message and the first parameter in the message 2.

In the message 2 shown in C10, the registration request message and/or the first parameter in the message 2 may also carry the identifier of the terminal device and/or the identifier of the second network. Alternatively, neither the registration request message nor the first parameter in the message 2 includes the identifier of the terminal device and the identifier of the second network.

C11. The message 2 includes the registration request message, a first parameter, and the identifier of the terminal device. In this case, the message 2 may further indicate not to parse the registration request message and the first parameter. For a manner in which the message 2 further indicates not to parse the registration request message and the first parameter, refer to the foregoing content. In this way, the identifier of the terminal device is carried in content other than the registration request message and the first parameter in the message 2.

In the message 2 shown in C11, the registration request message and/or the first parameter in the message 2 may also carry the identifier of the terminal device and/or the identifier of the second network. Alternatively, neither the registration request message nor the first parameter in the message 2 includes the identifier of the terminal device and the identifier of the second network.

C12. The message 2 includes the registration request message, a first parameter, the identifier of the second network, and the identifier of the terminal device. In this case, the message 2 may further indicate not to parse the registration request message and the first parameter. For a manner in which the message 2 further indicates not to parse the registration request message and the first parameter, refer to the foregoing content. In this way, the identifier of the second network and the identifier of the terminal device are carried in content other than the registration request message and the first parameter in the message 2.

In the message 2 shown in C12, the registration request message and/or the first parameter in the message 2 may also carry the identifier of the terminal device and/or the identifier of the second network. Alternatively, neither the registration request message nor the first parameter in the message 2 includes the identifier of the terminal device and the identifier of the second network.

S503: The first AMF sends a message 3 to a second AMF, and correspondingly the second AMF receives the message 3 from the first AMF. The message 3 may also be referred to as a second message.

For example, the message 3 may include the registration request message. Alternatively, the message 3 may further include a first connection identifier and/or the identifier of the terminal device. For content of the identifier of the terminal device and the first connection identifier, refer to the foregoing content.

The first connection identifier and/or the identifier of the terminal device may be carried in the registration request message in the message 3, or may be carried in content other than the registration request message in the message 3. This is not limited in embodiments of this application.

After the first AMF receives the message 2, or after the first AMF determines that registration of the terminal device is allowed, the first AMF may generate the message 3. A form of the message 3 may be an N14 message container. The message 3 indicates an address of the second AMF. The address of the second AMF is, for example, a domain name address or an internet protocol (internet protocol, IP) address of the second AMF. The domain name address of the second AMF is, for example, an FQDN of the second AMF. The following describes how the first AMF determines the address of the second AMF.

In a first manner, the first AMF pre-stores a first correspondence, and the first AMF determines the address of the second AMF based on the identifier of the second network and the first correspondence. The first correspondence may be protocol-configured in the first AMF, or may be received from another network element. The first correspondence may include the identifier of the second network and the address, of the second AMF (for example, the domain name address of the second AMF), corresponding to the identifier of the second network.

For example, the first AMF may use, in the first correspondence as the address of the second AMF, a domain name address, of an AMF, corresponding to the identifier of the second network. Alternatively, the first AMF may perform domain name query on a determined domain name of an AMF, to obtain the IP address of the second AMF, and use the IP address of the second AMF as the address of the second AMF. For example, the first AMF may query one or more domain name servers (domain name servers, DNS) for the IP address of the second AMF based on the determined domain name of the AMF. The one or more DNSs may include a local DNS, or include a local DNS and an external DNS.

In a second manner, the first AMF may construct the address of the second AMF based on the identifier of the second network.

For example, the first AMF pre-stores a rule for constructing the address of the second AMF. After obtaining the identifier of the second network, the first AMF may determine the address of the second AMF based on the identifier of the second network and a rule. The rule indicates the rule for constructing the address of the second AMF.

For example, the identifier of the second network is a PLMN ID of the second network, and the PLMN ID includes MCC and MNC. A rule for constructing the domain name address of the second AMF is amf.5g.mnc<MNC>.mcc<MCC>.pub.3gppnetwork.org. Correspondingly, after determining the identifier of the second network, the first AMF may determine the address of the second AMF based on the identifier of the second network and the rule. There may be a plurality of forms of the rule. This is not limited in embodiments of this application.

In a third manner, the first AMF obtains the address of the second AMF from an NRF of the second network.

For example, the first AMF sends, to an NRF of the first network based on locally configured NRF information of the first network, a first request message for discovering the second AMF, where the first request message includes the identifier of the second network. The NRF of the first network constructs an address of the NRF of the second network according to a protocol and the identifier of the second network. Alternatively, the NRF of the first network locally configures a correspondence between the identifier of the second network and the NRF of the second network, and the NRF of the first network determines an address of the NRF of the second network based on the identifier of the second network and the correspondence.

The NRF of the first network sends, to the NRF of the second network sequentially via a first SEPP and a second SEPP by using the address of the NRF of the second network, a second request message for discovering the second AMF. Then, the NRF of the second network may send the address of the second AMF to the first AMF sequentially via the second SEPP, the first SEPP, and the NRF of the first network.

The following describes content of the message 3. In addition to indicating the address of the second AMF, the message 3 may include the registration request message. Optionally, the message 3 may further include at least one of the first parameter, the identifier of the terminal device, and the first connection identifier. The identifier of the terminal device may be determined by the first AMF based on the message 2. The first connection identifier may be pre-stored in the first AMF.

The first connection identifier indicates a connection (or a communication link) between the RAN and the first AMF, and specifically, for example, indicates an interface between the RAN and the first AMF, for example, a next generation-control plane (next generation-control plane, NG-C) interface.

For example, the first connection identifier may include an identifier of a next generation application protocol UE transport network layer association (next generation application protocol UE transport network layer association, NGAP UE TNLA). The NGAP UE TNLA may be understood as a first communication link between the RAN and the first AMF, and the first communication link is used to transmit information about a specific terminal device. Alternatively, it may be understood that the first communication link is bound to a specific terminal device, and is used to transmit information about the terminal device. Alternatively, the first connection identifier is an identifier of a TNLA. The TNLA may also be understood as a second communication link between the RAN and the first AMF, and the second communication link is used to transmit information between the RAN and the first AMF, but is not used to transmit information about a specific terminal device.

The content of the message 3 varies with different content of the message 2. Descriptions are provided separately below.

D1. The message 2 is the message 2 shown in C1.

In this case, the message 3 may include the address of the second AMF, the registration request message, and the first connection identifier.

D2. The message 2 is the message 2 shown in C2 or C3.

In this case, the message 3 may include the address of the second AMF and the registration request message. Alternatively, the message 3 may include the address of the second AMF, the registration request message, and the first connection identifier.

D3. The message 2 is the message 2 shown in C4 or C7.

In this case, the message 3 may include the address of the second AMF, the registration request message, and the first connection identifier. Alternatively, the message 3 may include the first parameter, the address of the second AMF, the registration request message, and the first connection identifier.

D4. The message 2 is the message 2 shown in C5 or C6.

In this case, the message 3 may include the address of the second AMF and the registration request message. Alternatively, the message 3 may include the address of the second AMF, the registration request message, and the first connection identifier. Alternatively, the message 3 may include the address of the second AMF, the registration request message, and the first parameter. Alternatively, the message 3 includes the address of the second AMF, the registration request message, the first connection identifier, and the first parameter.

D5. The message 2 is the message 2 shown in C8 or C9.

In this case, the message 3 may include the address of the second AMF, the registration request message, and the first parameter. Alternatively, the message 3 may include the address of the second AMF, the registration request message, and the first connection identifier. Alternatively, the message 3 may include the first parameter, the address of the second AMF, the registration request message, and the first connection identifier.

D6. The message 2 is the message 2 shown in C10.

In this case, the message 3 may include the registration request message, the first parameter, and the first connection identifier. Alternatively, the message 3 includes the registration request message and the first connection identifier.

D7. The message 2 is the message 2 shown in C11 or C12.

In this case, the message 3 includes the registration request message and the identifier of the terminal device. Alternatively, the message 3 includes the registration request message, the first parameter, and the identifier of the terminal device. Alternatively, the message 3 includes the registration request message and the first connection identifier. Alternatively, the message 3 includes the registration request message, the first parameter, and the first connection identifier. Alternatively, the message 3 includes the registration request message, the identifier of the terminal device, and the first connection identifier. Alternatively, the message 3 includes the registration request message, the first parameter, the identifier of the terminal device, and the first connection identifier.

When the RAN does not determine whether registration of the terminal device is allowed, in a possible implementation, the first AMF may determine, based on the identifier of the second network, whether registration of the terminal device is allowed. For a manner in which the first AMF determines whether registration of the terminal device is allowed, refer to the foregoing content in which the RAN determines that registration of the terminal device is allowed. Details are not described herein again. Before determining whether registration of the terminal device is allowed, the first AMF needs to determine the identifier of the second network. A manner in which the first AMF determines the identifier of the second network varies with different content of the message 2. Descriptions are provided separately below.

Case 1: When the message 2 is any one of the messages 2 in C1 to C6, the first AMF may determine the identifier of the second network based on the registration request message.

If the registration request message is obtained by the terminal device or the RAN by encrypting the information shown in A1 and/or A2, the first AMF may decrypt the registration request message to obtain the identifier of the second network. The decrypted information may be protocol-configured in the first AMF, or may be obtained by the first AMF from another network element different from the first AMF. The decrypted information includes, for example, a decryption algorithm and/or a key.

If the registration request message is obtained by the terminal device or the RAN by encrypting a part or all of the information shown in A1, the first AMF may decrypt the part or all of the encrypted information shown in A1, to obtain the identifier of the second network. For a manner of obtaining the decrypted information by the first AMF and content of the decrypted information, refer to the foregoing descriptions.

Alternatively, if the registration request message is obtained by the terminal device or the RAN by encrypting a part or all of the information shown in A1, but the encrypted information does not affect determining of the identifier of the second network by the first AMF, the first AMF may not decrypt the encrypted information, and the first AMF may parse information other than the encrypted information in the registration request message to obtain the identifier of the second network.

Certainly, if the registration request message is not encrypted, the first AMF may directly parse the registration request message to obtain the identifier of the second network.

Case 2: When the message 2 is any one of the messages 2 in C7 to C9, the first AMF may determine the identifier of the second network based on the first parameter. In this case, the first AMF may not parse the registration request message, but may parse the first parameter to obtain the identifier of the second network.

Case 3: When the message 2 is any one of the messages 2 in C11 to C13, the first AMF may not parse the registration request message and the first parameter, but obtains the identifier of the second network based on the content other than the registration request message and the first parameter in the message 2.

It should be understood that, when the first AMF determines the identifier of the second network by using information other than the identifier of the terminal device in the message 2, the identifier of the terminal device included in the message 2 may not be used to determine the identifier of the second network. When the first AMF determines the identifier of the second network based on the identifier of the terminal device in the message 2, a function of the identifier of the terminal device includes but is not limited to determining the identifier of the second network. This is not limited in embodiments of this application.

In a possible implementation, the first AMF may directly send the message 3 to the second AMF. For example, the first AMF may directly send the message 3 to the second AMF based on the IP address of the second AMF.

In another possible implementation, the first AMF may send the message 3 to the second AMF sequentially via the first SEPP and the second SEPP.

In this case, S503 may include S503a, S503b, and S503c. The following separately describes the steps.

S503a: The first AMF sends a message 4 to the first SEPP, and correspondingly the first SEPP receives the message 4 from the first AMF.

For example, the first AMF may pre-store an address of the first SEPP. For example, the address of the first SEPP may be protocol-configured in the first AMF, or the first AMF receives the address of the first SEPP from the first SEPP. The first AMF may send the message 4 to the first SEPP based on the address of the first SEPP.

S503b: The first SEPP sends a message 5 to the second SEPP, and correspondingly the second SEPP receives the message 5 from the first SEPP. The message 5 may also be referred to as a fourth message.

The message 5 may be used to request registration of the terminal device. For example, the message 5 may include the registration request message, the second parameter, and the address of the second AMF. Alternatively, for example, the message 5 includes the registration request message and the address of the second AMF.

S503c: The second SEPP sends the message 3 to the second AMF, and correspondingly the second AMF receives the message 3 from the second SEPP.

If the address of the second AMF in the message 5 is the IP address of the second AMF, the second SEPP may directly send the message 3 to the second AMF based on the IP address of the second AMF. If the address of the second AMF in the message 5 is the domain name address of the second AMF, the second SEPP may determine the IP address of the second AMF based on the domain name address of the second AMF, and send the message 3 to the second AMF based on the IP address of the second AMF.

For example, the second SEPP may pre-store a second correspondence, and the second SEPP may determine, as the IP address of the second AMF, the IP address of the second AMF that is in the second correspondence and that corresponds to the domain name address of the second AMF. The second correspondence includes domain name addresses of K AMFs and IP address corresponding to each of the K AMFs. K is a positive integer. The K AMFs include the second AMF. The second correspondence may be protocol-configured for the second SEPP, or the second SEPP may receive the second correspondence from another network element (for example, the second AMF).

Alternatively, the second SEPP may obtain the IP address of the second AMF through query based on the domain name address of the second AMF. For a manner in which the second SEPP obtains the IP address through query based on the second AMF, refer to the foregoing manner in which the first AMF obtains the IP address through query based on the second AMF. Details are not described herein again.

In still another possible implementation, the first AMF may send the message 3 to the second AMF via the second SEPP. In this case, S503 may specifically include: The first AMF sends the message 5 to the second SEPP, and correspondingly the second SEPP receives the message 5 from the first AMF. The message 5 may also be referred to as the fourth message. The second SEPP sends the message 3 to the second AMF, and correspondingly the second AMF receives the message 3 from the second SEPP.

S504: The second AMF registers the terminal device.

For example, the second AMF may discover at least one of an UDM, an AUSF, and a PCF in the second network, and register the terminal device via the at least one of the UDM, the AUSF, and the PCF in the second network. For brevity, in the following, the UDM in the second network is briefly referred to as a second UDM, the AUSF in the second network is briefly referred to as a second AUSF, and the PCF in the second network is briefly referred to as a second PCF. The second UDM is, for example, the UDM in the HPLMN in FIG. 4, the second AUSF is, for example, the AUSF in the HPLMN in FIG. 4, and the second PCF is, for example, the PCF in the PLMN. Manners in which the second AMF discovers the UDM, the AUSF, and the PCF in the second network may be the same. The following uses an example in which the second AMF discovers the UDM for description.

For example, the second AMF may pre-store the address of the NRF in the second network, and send, to the NRF in the second network, a request message for discovering the second UDM, and the NRF in the second network may send information about the second UDM to the second AMF. For brevity, in the following, the NRF in the second network is referred to as a second NRF. The second NRF is, for example, the NRF in the hPLMN in FIG. 4. The information about the second UDM includes, for example, an address of the UDM, and the address of the UDM is, for example, an IP address.

For a manner in which the second AMF discovers the second AUSF and the second PCF, refer to content in which the second AMF discovers the UDM. Details are not described herein again. The following describes a process in which the second AMF registers the terminal device by using at least one of the second UDM, the second AUSF, and the second PCF.

For example, the second AMF may send, to the second UDM, a message used to request to obtain subscription information of the terminal device, and correspondingly the second UDM receives, from the second AMF, the message used to request to obtain the subscription information of the terminal device. The second UDM may send the subscription information of the terminal device to the second AMF. The subscription information of the terminal device is used for subscription of the terminal device.

The subscription information of the terminal device includes, for example, at least one of mobility subscription data, slice selection subscription data, SMF subscription data in the second network, UE context data in the SMF in the second network, and short message service (short message service, SMS) management subscription data. The mobility subscription data may indicate, for example, at least one of a subscribed UE-aggregated maximum bit rate (subscribed UE-aggregated maximum bit rate, subscribed UE-AMBR), a radio access technology restriction (radio access technology restriction, RAT restriction), and a service area restriction (service area restriction).

The second AMF may send, to the second AUSF, a message used to request to obtain authorization information of the terminal device, and correspondingly the second AUSF receives, from the second AMF, the message used to request to obtain the authorization information of the terminal device. The second AUSF may send the authorization information of the terminal device to the second AMF. The authorization information of the terminal device is used to authorize the terminal device. For example, the authorization information indicates a security key of the terminal device, and the security key may be used to parse a NAS message.

The second AMF may send, to the second PCF, a message used to request to obtain access policy information of the terminal device, and correspondingly the second PCF receives, from the second AMF, the message used to request to obtain the access policy information of the terminal device. The second PCF may send the access policy information of the terminal device to the second AMF. For example, the access policy information indicates an access network discovery and selection policy and a routing selection policy.

The foregoing describes a manner in which the second AMF registers the terminal device. Actually, the second AMF may register the terminal device in another manner. This is not specifically limited in embodiments of this application.

S505: The second AMF sends a message 6 to the first AMF, and correspondingly the first AMF receives the message 6 from the second AMF. The message 6 may also be referred to as a third message.

The message 6 may indicate that registration of the terminal device is accepted. The message 6 may include a registration accept (registration accept) message. The registration accept message indicates that registration of the terminal device is accepted. In addition to the registration accept message, the third message may include the first connection identifier and/or the identifier of the terminal device. Optionally, a form of the message 6 may also be an N14 message container.

For example, the second AMF may directly send the message 6 to the first AMF. Alternatively, the second AMF may send the message 6 to the first AMF sequentially via the second SEPP and the first SEPP.

S506: The first AMF sends a message 7 to the terminal device, and correspondingly the terminal device receives the message 7 from the first AMF. The message 7 may also be referred to as a registration accept message. The message 7 may indicate that registration of the terminal device is accepted. The registration accept message indicates that registration of the terminal device is accepted.

Optionally, S506 may include S506a and S506b. In S506a, the first AMF sends the message 7 to the RAN, and correspondingly the RAN receives the message 7 from the first AMF. In S506b, the RAN sends the message 7 to the terminal device, and correspondingly the terminal device receives the message 7 from the RAN.

If the message 6 includes the identifier of the terminal device, the first AMF may send the message 7 to the terminal device via the RAN based on the identifier of the terminal device. For example, the first AMF may transparently transmit the message 7 to the terminal device via the RAN. Alternatively, if the message 6 includes the first connection identifier, the first AMF may send the message 7 to the RAN based on the first connection identifier, so that the RAN sends the message 7 to the terminal device.

In this embodiment of this application, even if there is no physical connection between the RAN and the second network, the first AMF may request the second AMF in the second network to register the terminal device, so that the second network in which the second AMF is located can provide a service for the terminal device, to reduce costs of implementing access network sharing. In addition, a network element in the first network does not need to participate in a process in which the second AMF registers the terminal device with the second network. This simplifies the process of registering the terminal device and reduces signaling interaction, thereby helping improve efficiency of registering the terminal device. In addition, the second AMF may parse a part of information in the message 2, to determine the identifier of the second network. This helps reduce processing amounts of the second AMF.

The following describes the method for registering a terminal device in this embodiment of this application by using an example in which the first network is a vPLMN, the second network is an hPLMN, the first AMF is a vAMF, the second AMF is an hAMF, the first SEPP is a vSEPP, the second SEPP is an hSEPP, the first network is a network corresponding to an operator A, and the second network is a network corresponding to an operator B.

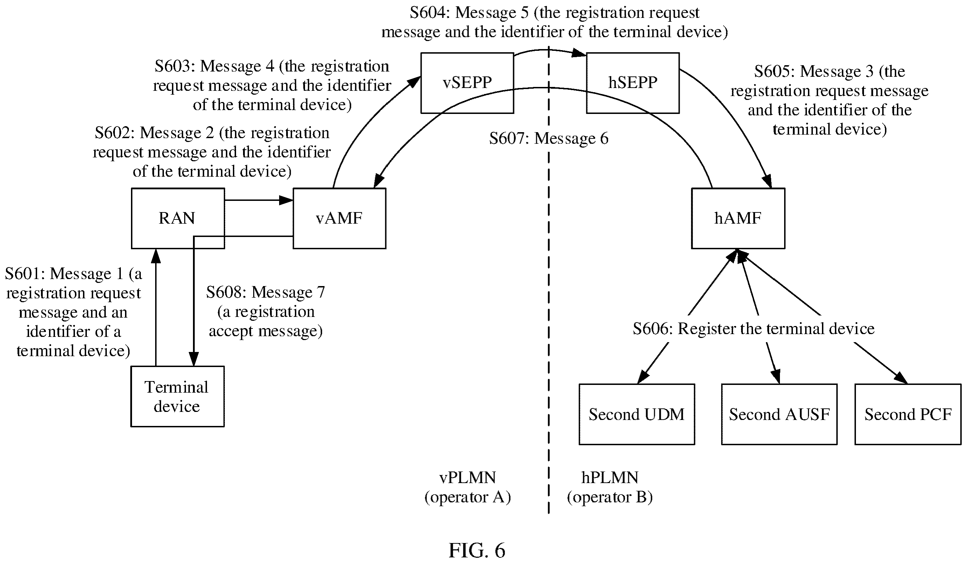

FIG. 6 is a diagram of a method for registering a terminal device according to an embodiment of this application. In FIG. 6, an example is used in which a message 1 to a message 5 each include a registration request message and an identifier of a terminal device, a message 6 includes a registration accept message and the identifier of the terminal device, the message 7 includes the registration accept message, and an hAMF sends the message 7 to a RAN based on the identifier of the terminal device.

S601: The terminal device sends the message 1 to the RAN, and correspondingly the RAN receives the message 1 from the terminal device.

For content of the message 1, refer to the foregoing content.

S602: The RAN sends the message 2 to the vAMF, and correspondingly the vAMF receives the message 2 from the RAN.

For content of the message 2, refer to the foregoing content.

S603: The vAMF sends the message 4 to the vSEPP, and correspondingly the vSEPP receives the message 4 from the vAMF.

For content of the message 4 and a manner of determining the content of the message 4 by the vAMF, refer to the foregoing content.

S604: The vSEPP sends the message 5 to the hSEPP, and correspondingly the hSEPP receives the message 5 from the vSEPP.

For content of the message 5, refer to the foregoing content.

S605: The hSEPP sends the message 3 to the hAMF, and correspondingly the hAMF receives the message 3 from the hSEPP.

For content of the message 3, refer to the foregoing content.

S606: The hAMF registers the terminal device via a second UDM, a second AUSF, and a second PCF.

For a manner in which the hAMF registers the terminal device, refer to the foregoing content.

S607: The hAMF sends the message 6 to the vAMF.

For content of the message 6, refer to the foregoing descriptions. Optionally, S607 includes S607a, S607b, and S607c. In S607a, the hAMF sends the message 6 to the hSEPP, and correspondingly the hSEPP receives the message 6 from the hAMF. In S607b, the hSEPP sends the message 6 to the vSEPP, and correspondingly the vSEPP receives the message 6 from the hSEPP. In S607c, the vSEPP sends the message 6 to the vAMF, and correspondingly the vAMF receives the message 6 from the vSEPP.

S608: The vAMF sends the message 7 to the terminal device via the RAN.

For example, the vAMF may send the message 7 to the terminal device via the RAN based on the identifier of the terminal device in the message 6.

In this embodiment of this application, the hAMF is used as a control point for controlling registration of the terminal device. Even if the terminal device subsequently roams to another network, the control point for controlling registration of the terminal device does not need to be switched. This helps maintain service continuity of the terminal device. In addition, the vAMF may determine an identifier of the hPLMN based on the identifier of the terminal device, and communicate with the terminal device. In this way, the identifier of the terminal device may have a plurality of functions. This helps reduce an amount of data exchanged between the vAMF and another network element.

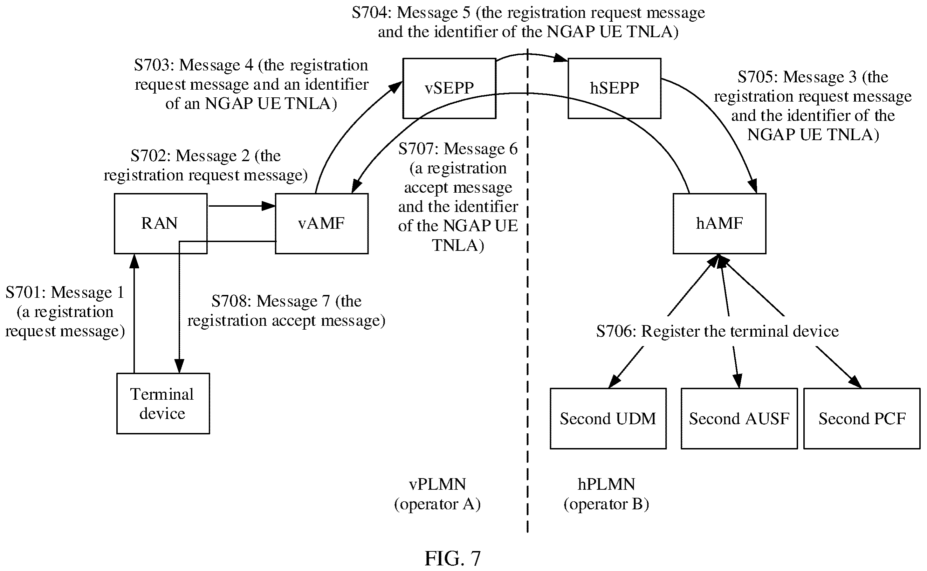

FIG. 7 is a diagram of another method for registering a terminal device according to an embodiment of this application. In FIG. 7, an example is used in which a message 1 to a message 5 each include a registration request message and an identifier of an NGAP UE TNLA, a message 6 includes a registration accept message and the identifier of the NGAP UE TNLA, a message 7 includes the registration accept message, an hAMF sends the message 7 to a RAN based on a first connection identifier, and the first connection identifier is the identifier of the NGAP UE TNLA.

S701: A terminal device sends the message 1 to the RAN, and correspondingly the RAN receives the message 1 from the terminal device.

For content of the message 1, refer to the foregoing content.

S702: The RAN sends the message 2 to a vAMF, and correspondingly the vAMF receives the message 2 from the RAN.

For content of the message 2, refer to the foregoing content.

S703: The vAMF sends the message 4 to a vSEPP, and correspondingly the vSEPP receives the message 4 from the vAMF.

For content of the message 4, refer to the foregoing content.

S704: The vSEPP sends the message 5 to an hSEPP, and correspondingly the hSEPP receives the message 5 from the vSEPP.

For content of the message 5, refer to the foregoing content.

S705: The hSEPP sends the message 3 to the hAMF, and correspondingly the hAMF receives the message 3 from the hSEPP.

For content of the message 3, refer to the foregoing content.

S706: The hAMF registers the terminal device via a second UDM, a second AUSF, and a second PCF.

For a process in which the hAMF registers the terminal device via the second UDM, the second AUSF, and the second PCF, refer to the foregoing content.

S707: The hAMF sends the message 6 to the vAMF.

For content of the message 6, refer to the foregoing content. Optionally, S707 includes S707a, S707b, and S707c. In S707a, the hAMF sends the message 6 to the hSEPP, and correspondingly the hSEPP receives the message 6 from the hAMF. In S707b, the hSEPP sends the message 6 to the vSEPP, and correspondingly the vSEPP receives the message 6 from the hSEPP. In S707c, the vSEPP sends the message 6 to the vAMF, and correspondingly the vAMF receives the message 6 from the vSEPP.

S708: The vAMF sends the message 7 to the terminal device via the RAN.

For content of the message 7, refer to the foregoing content.

For example, the vAMF may send the message 7 to the RAN via the NGAP UE TNLA based on the identifier of the NGAP UE TNLA in the message 6, and correspondingly the RAN receives the message 7 from the vAMF and sends the message 7 to the terminal device.

In this embodiment of this application, the hAMF is used as a control point for controlling registration of the terminal device. Even if the terminal device subsequently roams to another network, the control point for controlling registration of the terminal device does not need to be switched. This helps maintain service continuity of the terminal device. In addition, the vAMF may communicate with the terminal device based on the NGAP UE TNLA. This provides another manner of establishing communication between the vAMF and the terminal device.

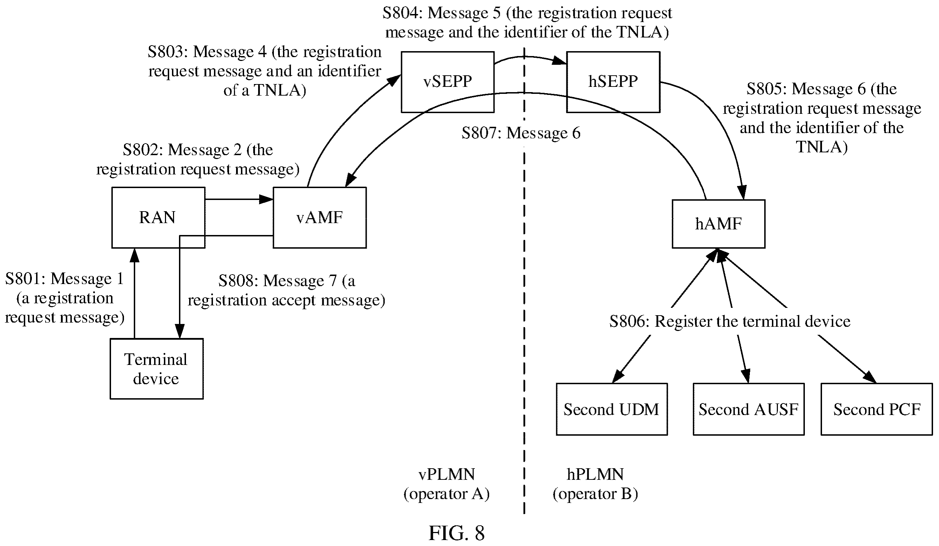

FIG. 8 is a diagram of still another method for registering a terminal device according to an embodiment of this application. In FIG. 8, an example is used in which a message 1 to a message 5 each include a registration request message and an identifier of a TNLA, a message 6 includes a registration accept message and the identifier of the TNLA, a message 7 includes the registration accept message, an hAMF sends the message 7 to a RAN based on a first connection identifier, and the first connection identifier is the identifier of the TNLA.

S801: A terminal device sends the message 1 to the RAN, and correspondingly the RAN receives the message 1 from the terminal device.

For content of the message 1, refer to the foregoing content.

S802: The RAN sends the message 2 to a vAMF, and correspondingly the vAMF receives the message 2 from the RAN.

For content of the message 2, refer to the foregoing content.

S803: The vAMF sends the message 4 to a vSEPP, and correspondingly the vSEPP receives the message 4 from the vAMF.

For content of the message 4, refer to the foregoing content.

S804: The vSEPP sends the message 5 to an hSEPP, and correspondingly the hSEPP receives the message 5 from the vSEPP.

For content of the message 5, refer to the foregoing content.

S805: The hSEPP sends the message 6 to the hAMF, and correspondingly the hAMF receives the message 6 from the hSEPP.

For content of the message 6, refer to the foregoing content.

S806: The hAMF registers the terminal device via a second UDM, a second AUSF, and a second PCF.

For a process in which the hAMF registers the terminal device via the second UDM, the second AUSF, and the second PCF, refer to the foregoing content.

S807: The hAMF sends the message 6 to the vAMF sequentially via the hSEPP and the vSEPP.

For content of the message 6, refer to the foregoing content. Optionally, S807 includes S807a, S807b, and S807c. In S807a, the hAMF sends the message 6 to the hSEPP, and correspondingly the hSEPP receives the message 6 from the hAMF. In S807b, the hSEPP sends the message 6 to the vSEPP, and correspondingly the vSEPP receives the message 6 from the hSEPP. In S707c, the vSEPP sends the message 6 to the vAMF, and correspondingly the vAMF receives the message 6 from the vSEPP.

S808: The vAMF sends the message 7 to the terminal device via the RAN.

For content of the message 7, refer to the foregoing content. For example, the vAMF may send the message 7 to the RAN via the TNLA based on the identifier of the TNLA in the message 6, and correspondingly the RAN receives the message 7 from the vAMF and sends the message 7 to the terminal device.

In this embodiment of this application, the hAMF is used as a control point for controlling registration of the terminal device. Even if the terminal device subsequently roams to another network, the control point for controlling registration of the terminal device does not need to be switched. This helps maintain service continuity of the terminal device. In addition, the vAMF may communicate with the terminal device based on the TNLA. This provides another manner of establishing communication between the vAMF and the terminal device.

To reduce costs of access network sharing, an embodiment of this application further provides a method for registering a terminal device. In the method, an access network element may discover an address of a mobility management network element (for example, a second AMF) in a second network, and establish wireless communication with the second AMF via a mobility management network element (for example, a first AMF) in a first network; and the access network element may directly request the second AMF to register the terminal device, to complete registration of terminal device. In this way, even if there is no physical connection between the access network element and the second network, the second AMF can register the terminal device, so that the second network can provide a service for the terminal device. This reduces costs of implementing access network sharing.

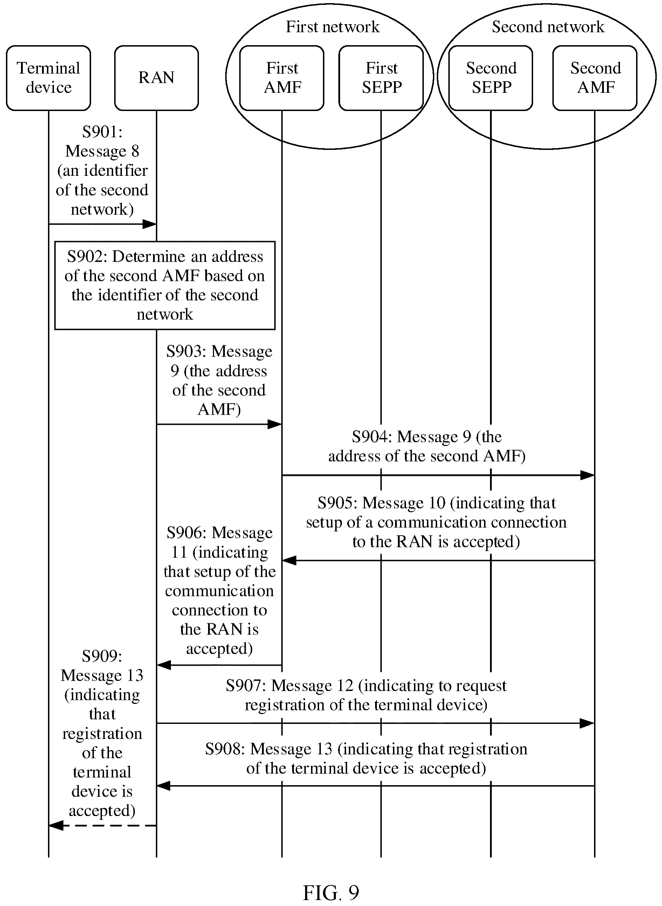

FIG. 9 is a diagram of yet another method for registering a terminal device according to an embodiment of this application.

S901: The terminal device sends a message 8 to a RAN, and correspondingly the RAN receives the message 8 from the terminal device. The message 8 may also be referred to as a tenth message. The message 8 may indicate an identifier of the second network.

For example, the message 8 may include a registration request message. Optionally, the message 8 may further include a second parameter. For content of the registration request message, refer to content of the foregoing registration request message. For content of the second parameter, refer to content of the foregoing second parameter.

S902: The RAN determines an address of the second AMF based on the identifier of the second network.

The address of the second AMF is, for example, an IP address or a domain name address of the second AMF. For a manner in which the RAN determines the address of the second AMF, refer to the foregoing content in which the first AMF determines the address of the second AMF. Details are not described herein again.

In a possible implementation, the RAN may determine, based on the identifier of the second network, that registration of the terminal device is allowed. For content of determining, by the RAN, that registration of the terminal device is allowed, refer to the foregoing content. Details are not described herein again.

S903: The RAN sends a message 9 to the first AMF, and correspondingly the first AMF receives the message 9 from the RAN. The message 9 may also be referred to as a sixth message. The message 9 is used to request to set up a communication connection between the RAN and the second AMF. The message 9 may include the address of the second AMF. Optionally, the message 9 may further include the identifier of the second network and/or an identifier of a selected network. For a meaning of the identifier of the selected network, refer to the foregoing content.

For example, the message 9 may include a connection setup request (setup request) message, and the connection setup request message is used to request to set up the communication connection between the RAN and the second AMF.

S904: The first AMF sends the message 9 to the second AMF, and correspondingly the second AMF receives the message 9 from the first AMF.

In a possible implementation, the first AMF may directly send the message 9 to the second AMF. For example, the first AMF may directly send the message 9 to the second AMF based on the IP address of the second AMF.

In another possible implementation, the first AMF may send the message 9 to the second AMF sequentially via the first SEPP and the second SEPP.

In this case, S904 may include S904a, S904b, and S904c. The following separately describes the steps.

In S904a, the first AMF sends the message 9 to the first SEPP, and correspondingly the first SEPP receives the message 9 from the first AMF.

For example, the first AMF may pre-store an address of the first SEPP. For example, the address of the first SEPP may be protocol-configured in the first AMF, or the first AMF receives the address of the first SEPP from the first SEPP. The first AMF may send the message 9 to the first SEPP based on the address of the first SEPP.

In S904b, the first SEPP sends the message 9 to the second SEPP, and correspondingly the second SEPP receives the message 9 from the first SEPP.

In S904c, the second SEPP sends the message 9 to the second AMF, and correspondingly the second AMF receives the message 9 from the second SEPP. For content of the message 9, refer to content of the message 9 aforementioned.

If the address of the second AMF in the message 9 is the IP address of the second AMF, the second SEPP may directly send the message 9 to the second AMF. Alternatively, if the address of the second AMF in the message 9 is the domain name address of the second AMF, the second SEPP may determine the IP address of the second AMF based on the domain name address of the second AMF, and then send the message 9 to the second AMF based on the IP address of the second AMF. For a manner in which the second SEPP determines the IP address of the second AMF, refer to the foregoing content.

In still another possible implementation, the first AMF may send the message 9 to the second AMF via the second SEPP. For content of the message 9 sent by the first AMF to the second AMF via the second SEPP, refer to the foregoing content of the message 3 sent by the first AMF to the second AMF via the second SEPP.

S905: The second AMF sends a message 10 to the first AMF, and correspondingly the first AMF receives the message 10 from the second AMF. The message 10 may also be referred to as a seventh message. The message 10 indicates that the second AMF accepts setup of the communication connection to the RAN. Optionally, the message 10 may also be a connection setup response (setup response) message, and the connection setup response message indicates that establishment of the communication connection between the RAN and the second AMF is accepted.

For example, the second AMF may send the message 10 to the first AMF sequentially via the second SEPP and the first SEPP.

In a possible implementation, before the second AMF performs S905, and when the message 9 includes the identifier of the second network and/or the identifier of the selected network, the second AMF may further determine, based on the identifier of the second network and/or the identifier of the selected network, whether to accept setup of the communication connection to the RAN.

For example, if the message 9 includes the identifier of the second network, the second AMF determines to accept a request for establishing the communication connection between the RAN and the second AMF. For another example, if the message 9 includes the identifier of the selected network, the second AMF determines to accept a request for establishing the communication connection between the RAN and the second AMF. For another example, if the message 9 does not include the identifier of the second network and the identifier of the selected network, the second AMF determines not to accept a request for establishing the communication connection between the RAN and the second AMF.

S906: The first AMF sends a message 11 to the RAN, and correspondingly the RAN receives the message 11 from the first AMF. The message 11 may also be referred to as a connection setup response message.

In this way, a wireless communication connection is established between the RAN the second AMF.

S907: The RAN sends a message 12 to the second AMF, and correspondingly the second AMF receives the message 12 from the RAN, where the message 12 may also be referred to as an eighth message.

For example, the message 12 may indicate to request registration of the terminal device. For example, the message 12 includes the registration request message, and the registration request message indicates to request registration of the terminal device.

S908: The second AMF sends a message 13 to the RAN, and correspondingly the RAN receives the message 13 from the second AMF. The message 13 may also be referred to as a ninth message.

Alternatively, the second AMF may register the terminal device. For a process of registering the terminal device, refer to the foregoing content of registering the terminal device. Details are not described herein again.

For example, the message 13 may indicate that registration of the terminal device is accepted. For example, the message 13 includes a registration accept message, and the registration accept message indicates that registration of the terminal device is accepted.

S909: The RAN sends the message 13 to the terminal device, and correspondingly the terminal device receives the message 13 from the RAN.

In this embodiment of this application, the RAN may directly determine the address of the second AMF in the second network, establish wireless communication with the second AMF, and request the second AMF to register the terminal device. Therefore, even if there is no physical connection between the RAN and the second network, the second network may still provide a service for the terminal device via the RAN. This reduces costs of a shared access network. In addition, a control point for registering the terminal device is located in the second AMF in the second network. This also helps simplify a procedure of registering the terminal device and reduce signaling interaction. In addition, the first AMF and the like may forward a message as requested by the RAN. This reduces a processing amount of the first AMF.

The following describes a process of a method for registering a terminal device in this embodiment of this application by using an example in which a first network is an hPLMN, a second network is a vPLMN, a first AMF is a vAMF, a second AMF is an hAMF, a first SEPP is a vSEPP, a second SEPP is an hSEPP, the first network is a network corresponding to an operator A, and the second network is a network corresponding to an operator B.

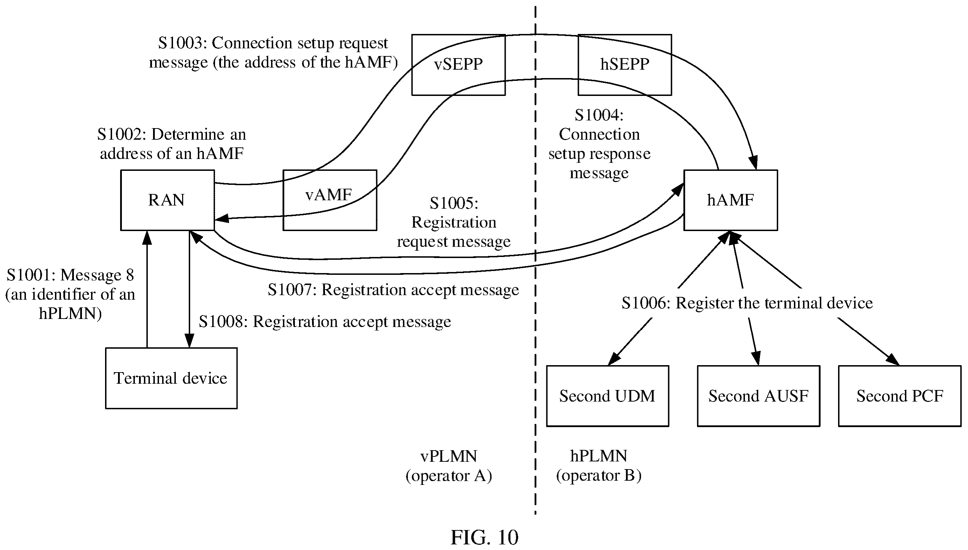

FIG. 10 is a diagram of still yet another method for registering a terminal device according to an embodiment of this application. In FIG. 10, an example is used in which a message 8 indicates an identifier of the hPLMN, a message 9 includes a connection setup request message, a message 10 and a message 11 include a connection setup response message, a message 12 includes a registration request message, and a message 13 includes a registration accept message.

S1001: A terminal device sends the message 8 to a RAN, and correspondingly the RAN receives the message 8 from the terminal device. The message 8 may indicate the identifier of the hPLMN. For content of the message 8, refer to the foregoing content.

S1002: The RAN determines an address of the hAMF. For content of determining the address of the hAMF by the RAN, refer to the foregoing content.

S1003: The RAN sends a connection setup request to the hAMF, and correspondingly the hAMF receives the connection setup request from the RAN. The connection setup request includes the address of the hAMF.

Optionally, S1003 may include S1003a, S1003b, S1003c, and S1003d. In S1003a, the RAN sends the message 9 to the vAMF, and correspondingly the vAMF receives the message 9 from the RAN. In S1003b, the vAMF sends the message 9 to the vSEPP, and correspondingly the vSEPP receives the message 9 from the vAMF. In S1003c, the vSEPP sends the message 9 to the hSEPP, and correspondingly the hSEPP receives the message 9 from the vSEPP. In S1003d, the hSEPP sends the message 9 to the hAMF, and correspondingly the hAMF receives the message 9 from the hSEPP. In this way, a process in which the RAN sends the connection setup request to the hAMF is completed.

S1004: The hAMF sends the connection setup response message to the RAN, and correspondingly the RAN receives the connection setup response message from the hAMF.

Optionally, the hAMF may send the connection setup response message to the RAN sequentially via the hSEPP, the vSEPP, and the vAMF. In this case, S1004 may include S1004a, S1004b, and S1004c. In S1004a, the hAMF sends the connection setup response message to the hSEPP, and correspondingly the hSEPP receives the connection setup response message from the hAMF. In S1004b, the hSEPP sends the connection setup response message to the vSEPP, and correspondingly the vSEPP receives the connection setup response message from the hSEPP. In S1004c, the vSEPP sends the connection setup response message to the vAMF, and correspondingly the vAMF receives the connection setup response message from the vSEPP.

S1005: The RAN sends the registration request message to the hAMF, and correspondingly the hAMF receives the registration request message from the RAN.

S1006: The hAMF may register the terminal device via a second UDM, a second AUSF, and a second PCF. For content of registering the terminal device, refer to the foregoing content. Details are not described herein again.

S1007: The hAMF sends the registration accept message to the RAN, and correspondingly the RAN receives the registration accept message from the hAMF.

S1008: The RAN sends the registration accept message to the terminal device, and correspondingly the terminal device receives the registration accept message from the RAN.

In this embodiment of this application, the RAN may directly establish wireless communication with the second AMF, and request the hAMF to register the terminal device. Therefore, even if there is no physical connection between the RAN and the hPLMN, the hPLMN may still provide a service for the terminal device via the RAN. This reduces costs of a shared access network. In addition, a control point for registering the terminal device is located in the hAMF in the hPLMN. This also helps simplify a procedure of registering the terminal device, reduce signaling interaction, and maintain service continuity of the terminal device. In addition, the hAMF may directly exchange a message with the RAN. This reduces a quantity of information exchange times in the communication system.

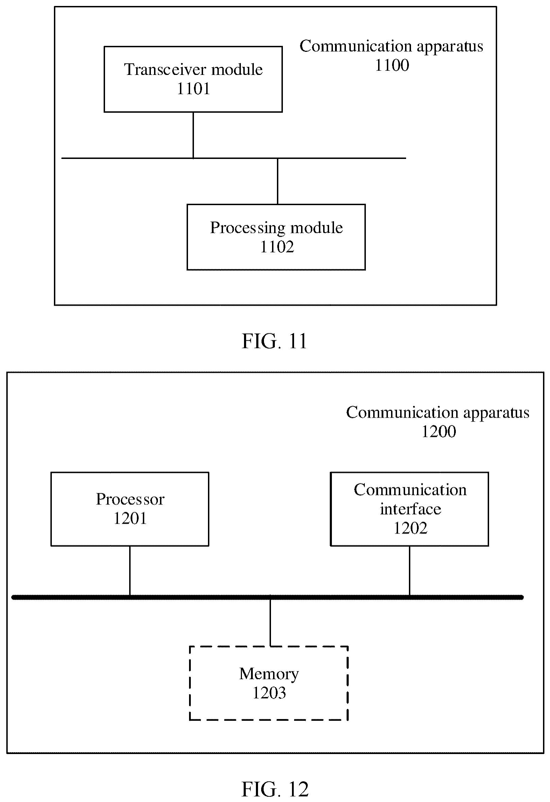

FIG. 11 is a diagram of a structure of a communication apparatus according to an embodiment of this application.

As shown in FIG. 11, the communication apparatus 1100 includes a transceiver module 1101 and a processing module 1102. The communication apparatus 1100 may be a hardware device, a component in the hardware device, a software module in the hardware device, or the like.

In a first embodiment, the communication apparatus 1100 may be configured to implement a function of any of the first AMFs in FIG. 5 to FIG. 8. Correspondingly, the communication apparatus 1100 may also be configured to implement steps performed by any of the first AMFs in FIG. 5 to FIG. 8.

For example, the communication apparatus 1100 may be configured to implement the function of the first AMF in FIG. 5.

For example, the transceiver module 1101 may perform steps S502, S503, S505, and S506a under control of the processing module 1102.

For another example, the communication apparatus 1100 may be configured to implement the function of the first AMF in FIG. 6.

For example, the transceiver module 1101 may perform steps S602, S603, S607, and S608 under control of the processing module 1102.

For another example, the communication apparatus 1100 may be configured to implement the function of the first AMF in FIG. 7.

For example, the transceiver module 1101 may perform steps S702, S703, S707, and S708 under control of the processing module 1102.

For another example, the communication apparatus 1100 may be configured to implement the function of the first AMF in FIG. 8.

For example, the transceiver module 1101 may perform steps S802, S803, S807, and S808 under control of the processing module 1102.

In a second embodiment, the communication apparatus 1100 may be configured to implement a function of any of the second AMFs in FIG. 5 to FIG. 8. Correspondingly, the communication apparatus 1100 may also be configured to implement steps performed by any of the second AMFs in FIG. 5 to FIG. 8.

For example, the communication apparatus 1100 may be configured to implement the function of the second AMF in FIG. 5.

For example, the transceiver module 1101 may perform steps S503 and S505 under control of the processing module 1102. Optionally, the transceiver module 1101 may further perform step S504 under control of the processing module 1102.

For another example, the communication apparatus 1100 may be configured to implement the function of the second AMF in FIG. 6.

For example, the transceiver module 1101 may perform steps S605 and S607 under control of the processing module 1102. Optionally, the transceiver module 1101 may further perform step S606 under control of the processing module 1102.

For another example, the communication apparatus 1100 may be configured to implement the function of the second AMF in FIG. 7.

For example, the transceiver module 1101 may perform steps S705 and S707 under control of the processing module 1102. Optionally, the transceiver module 1101 may further perform step S706 under control of the processing module 1102.

For another example, the communication apparatus 1100 may be configured to implement the function of the second AMF in FIG. 8.

For example, the transceiver module 1101 may perform steps S805 and S807 under control of the processing module 1102. Optionally, the transceiver module 1101 may further perform step S806 under control of the processing module 1102.

In a third embodiment, the communication apparatus 1100 may be configured to implement a function of any of the RANs in FIG. 5 to FIG. 8. Correspondingly, the communication apparatus 1100 may also be configured to implement steps performed by any of the RANs in FIG. 5 to FIG. 8.

For example, the communication apparatus 1100 may be configured to implement the function of the RAN in FIG. 5.

For example, the transceiver module 1101 may perform steps S501, S502, and S506a under control of the processing module 1102. Optionally, the transceiver module 1101 may further perform step S506b under control of the processing module 1102.

For another example, the communication apparatus 1100 may be configured to implement the function of the RAN in FIG. 6.

For example, the transceiver module 1101 may perform steps S601 and S602 under control of the processing module 1102.

For another example, the communication apparatus 1100 may be configured to implement the function of the RAN in FIG. 7.

For example, the transceiver module 1101 may perform steps S701 and S702 under control of the processing module 1102.

For another example, the communication apparatus 1100 may be configured to implement the function of the RAN in FIG. 8.

For example, the transceiver module 1101 may perform steps S801 and S802 under control of the processing module 1102.

In a fourth embodiment, the communication apparatus 1100 may be configured to implement a function of the first AMF in FIG. 9 or FIG. 10. Correspondingly, the communication apparatus 1100 may also be configured to implement steps performed by the first AMF in FIG. 9 or FIG. 10.

For example, the communication apparatus 1100 may be configured to implement the function of the first AMF in FIG. 9.

For example, the transceiver module 1101 may perform steps S903, S904, S905, and S906 under control of the processing module 1102.

For another example, the communication apparatus 1100 may be configured to implement the function of the first AMF in FIG. 10.

For example, the transceiver module 1101 may perform step S1003b under control of the processing module 1102.

In a fifth embodiment, the communication apparatus 1100 may be configured to implement a function of the second AMF in FIG. 9 or FIG. 10. Correspondingly, the communication apparatus 1100 may also be configured to implement steps performed by the second AMF in FIG. 9 or FIG. 10.

For example, the communication apparatus 1100 may be configured to implement the function of the second AMF in FIG. 9.

For example, the transceiver module 1101 may perform steps S904, S905, S907, and S908 under control of the processing module 1102.

For another example, the communication apparatus 1100 may be configured to implement the function of the second AMF in FIG. 10.

For example, the transceiver module 1101 may perform steps S1003d and S1004a under control of the processing module 1102. Optionally, the transceiver module 1101 may perform step S1006 under control of the processing module 1102.

In a sixth embodiment, the communication apparatus 1100 may be configured to implement a function of the RAN in FIG. 9 or FIG. 10. Correspondingly, the communication apparatus 1100 may also be configured to implement steps performed by the RAN in FIG. 9 or FIG. 10.

For example, the communication apparatus 1100 may be configured to implement the function of the RAN in FIG. 9.

For example, the transceiver module 1101 may perform steps S901, S903, and S906 to S908 under control of the processing module 1102. The processing module 1102 may be configured to perform step S902. Optionally, the transceiver module 1101 may perform step S909 under control of the processing module 1102.

For another example, the communication apparatus 1100 may be configured to implement the function of the RAN in FIG. 10.

For example, the transceiver module 1101 may perform steps S1001, S1002, S1003a, S1004, S1005, S1007, and S1008 under control of the processing module 1102.

For specific content of steps mentioned in this embodiment of this application, refer to the foregoing content. Details are not described herein again.

FIG. 12 is a diagram of a structure of a communication apparatus according to an embodiment of this application.

As shown in FIG. 12, the communication apparatus 1200 includes a processor 1201 and a communication interface 1202. The processor 1201 and the communication interface 1202 are coupled to each other, or are designed independently. The communication interface 1202 may be, for example, a transceiver or an input/output interface. The processor 1201 and the communication interface 1202 may implement the method in any one of FIG. 5 to FIG. 10. The processor 1201 and the communication interface 1202 may also implement steps of the network elements such as the first AMF, the second AMF, or the RAN in FIG. 5 to FIG. 10.

Optionally, the communication apparatus 1200 may further include a memory 1203, configured to store instructions executed by the processor 1201, or store input data required by the processor 1201 to run instructions, or store data generated after the processor 1201 runs instructions.

Any two of the processor 1201, the communication interface 1202, and the memory 1203 may communicate with each other through a bus. The bus may be a peripheral component interconnect (peripheral component interconnect, PCI) bus, an extended industry standard architecture (extended industry standard architecture, EISA) bus, or the like. Buses may be classified into an address bus, a data bus, a control bus, and the like. Optionally, the processor 1201 is configured to implement functions of the processing module 1102, and the communication interface 1202 is configured to implement functions of the transceiver module 1101.

It may be understood that the processor 1201 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor. The memory 1203 may include a volatile memory (volatile memory), for example, a random access memory (random access memory, RAM). The memory may further include a non-volatile memory (non-volatile memory), for example, a read-only memory (read-only memory, ROM), a flash memory, a hard disk drive (hard disk drive, HDD), or a solid state drive (solid state drive, SSD).

An embodiment of this application provides a communication system. The communication system includes any first AMF and any second AMF in FIG. 5 to FIG. 8. Optionally, the communication system further includes any RAN in FIG. 5 to FIG. 8. For functions of the first AMF, the second AMF, and the RAN, refer to the foregoing content. Details are not described herein again.

An embodiment of this application provides a communication system. The communication system includes the first AMF, the second AMF, and the RAN in FIG. 9 or FIG. 10. For functions of the first AMF, the second AMF, and the RAN, refer to the foregoing content. Details are not described herein again.

An embodiment of this application provides a chip system. The chip system includes a processor and an interface. The processor is configured to: invoke instructions from the interface and run the instructions. When executing the instructions, the processor implements the method in any one of the foregoing implementations, for example, the method in any one of FIG. 5 to FIG. 10.

An embodiment of this application provides a computer-readable storage medium. The computer-readable storage medium is configured to store a computer program or instructions. When the computer program or the instructions are run, the method according to any one of the foregoing implementations, for example, the method according to any one of FIG. 5 to FIG. 10, is implemented.

An embodiment of this application provides a computer program product including instructions. When the computer program product runs on a computer, the method in any one of the foregoing implementations, for example, the method in any one of FIG. 5 to FIG. 10, is implemented.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A method for registering a terminal device, applied to a first mobility management network element in a first network, wherein the method comprises:
receiving a first message from an access network element, wherein the first message comprises a registration request message, the registration request message is used to request registration of a terminal device, and the first message indicates an identifier of a second network;
sending a second message to a second mobility management network element in the second network based on the identifier of the second network, wherein the second message comprises the registration request message; and
receiving a third message from the second mobility management network element, wherein the third message indicates that registration of the terminal device is accepted.

2. The method according to claim 1, wherein the method further comprises:
determining, based on the identifier of the second network, that registration of the terminal device is allowed.

3. The method according to claim 1 or 2, wherein the first message further comprises a first parameter, and one of the registration request message and the first parameter comprises the identifier of the second network and/or an identifier of the terminal device; or
when the first message further comprises a first parameter, the first message further comprises the identifier of the second network and/or an identifier of the terminal device, wherein
the first parameter is used to assist in accessing the terminal device, and the identifier of the terminal device is used to determine the identifier of the second network.

4. The method according to claim 3, wherein
when the first message further comprises the first parameter, and the first parameter comprises the identifier of the second network and/or the identifier of the terminal device, the first message indicates the first mobility management network element not to parse the registration request message; or
when the first message further comprises the first parameter, and the first message further comprises the identifier of the second network and/or the identifier of the terminal device, the first message indicates the first mobility management network element not to parse the registration request message and the first parameter.

5. The method according to any one of claims 1 to 4, wherein the second message comprises a first connection identifier and/or the identifier of the terminal device, the third message comprises a registration accept message, the third message further comprises the first connection identifier and/or the identifier of the terminal device, the registration accept message indicates that registration of the terminal device is accepted, and the first connection identifier identifies a connection between the access network element and the first mobility management network element; and the method further comprises:
sending the registration accept message to the terminal device via the access network element based on the first connection identifier and/or the identifier of the terminal device.

6. The method according to any one of claims 1 to 5, wherein sending the second message to the second mobility management network element in the second network based on the identifier of the second network comprises:
determining an address of the second mobility management network element based on the identifier of the second network; and
sending a fourth message to a security edge protection proxy in the second network, so that the security edge protection proxy in the second network sends the fourth message to the second mobility management network element, wherein the fourth message comprises the address of the second mobility management network element and the registration request message.

7. A method for registering a terminal device, applied to a second mobility management network element in a second network, wherein the method comprises:
receiving a second message from a first mobility management network element in a first network, wherein the second message comprises a registration request message, and the registration request message is used to request registration of a terminal device; and
sending a third message to the first mobility management network element, wherein the third message indicates that registration of the terminal device is accepted.

8. The method according to claim 7, wherein the second message and the third message each comprise a first connection identifier and/or an identifier of the terminal device, and the first connection identifier identifies a connection between an access network element and the first mobility management network element.

9. The method according to claim 7 or 8, wherein before sending the third message to the first mobility management network element, the method further comprises at least one of the following:
sending, to a unified data management network element in the second network, a message used to request to obtain subscription information of the terminal device, and receiving the subscription information of the terminal device from the unified data management network element in the second network;
sending, to an authentication service network element in the second network, a message used to request to obtain authorization information of the terminal device, and receiving the authorization information of the terminal device from the authentication service network element in the second network; or
sending, to a policy control network element in the second network, a message used to request to obtain access policy information of the terminal device, and receiving the access policy information of the terminal device from the policy control network element in the second network.

10. The method according to any one of claims 7 to 9, wherein the second message further comprises a first parameter; and
one of the registration request message and the first parameter comprises an identifier of the second network and/or the identifier of the terminal device, wherein
the first parameter is used to assist in accessing the terminal device, and the identifier of the terminal device is used to determine the identifier of the second network.

11. A method for registering a terminal device, applied to an access network element, wherein the method comprises:
receiving a fifth message from the terminal device, wherein the fifth message comprises a registration request message, the registration request message is used to request registration of the terminal device, the fifth message indicates an identifier of a second network, and the identifier of the second network is used to determine a second mobility management network element in the second network;
sending a first message to a first mobility management network element in a first network, wherein the first message comprises the registration request message, and the first message indicates the identifier of the second network; and
receiving a registration accept message from the first mobility management network element, wherein the registration accept message indicates that the second mobility management network element accepts registration of the terminal device.

12. The method according to claim 11, wherein the fifth message further comprises a second parameter; and
one of the registration request message and the second parameter comprises the identifier of the second network and/or an identifier of the terminal device, wherein
the second parameter is used to assist in accessing the terminal device, and the identifier of the terminal device is used to determine the identifier of the second network.

13. The method according to claim 11 or 12, wherein the first message further comprises a first parameter, and one of the registration request message and the first parameter comprises the identifier of the second network and/or the identifier of the terminal device; or
when the first message comprises the registration request message and a first parameter, the first message further comprises the identifier of the second network and/or the identifier of the terminal device, wherein
the first parameter is used to assist in accessing the terminal device, and the identifier of the terminal device is used to determine the identifier of the second network.

14. The method according to claim 13, wherein when the first message further comprises the first parameter, and the first parameter comprises the identifier of the second network and/or the identifier of the terminal device, the first message indicates the first mobility management network element not to parse the registration request message; or
when the first message further comprises the first parameter, and the first message further comprises the identifier of the second network and/or the identifier of the terminal device, the first message indicates the first mobility management network element not to parse the registration request message and the first parameter.

15. The method according to any one of claims 11 to 14, wherein the method further comprises:
determining, based on the identifier of the second network, that registration of the terminal device is allowed.

16. A method for registering a terminal device, applied to a first mobility management network element in a first network, wherein the method comprises:
receiving a sixth message from an access network element, wherein the sixth message is used to request to set up a communication connection between the access network element and a second mobility management network element in a second network, and the sixth message comprises an address of the second mobility management network element;
sending the sixth message to the second mobility management network element; and
receiving a seventh message from the second mobility management network element, wherein the seventh message indicates that the second mobility management network element accepts setup of the communication connection to the access network element.

17. The method according to claim 16, wherein the sixth message comprises an identifier of the second network and/or an identifier of the first network, and the identifier of the first network is used to determine the identifier of the second network.

18. The method according to claim 16 or 17, wherein the seventh message comprises a connection setup response message and an address of the access network element, and the connection setup response message indicates that the second mobility management network element accepts setup of the communication connection to the access network element; and the method further comprises:
sending the connection setup response message to the access network element based on the address of the access network element.

19. A method for registering a terminal device, applied to a second mobility management network element in a second network, wherein the method comprises:
receiving a sixth message from a first mobility management network element in a first network, wherein the sixth message is used to request to set up a communication connection between an access network element and the second mobility management network element in the second network; and
sending a seventh message to the first mobility management network element, wherein the seventh message indicates that the second mobility management network element accepts setup of the communication connection to the access network element.

20. The method according to claim 19, wherein after sending the seventh message to the first mobility management network element in the first network, the method further comprises:
receiving an eighth message from the access network element, wherein the eighth message is used to request registration of a terminal device; and
sending a ninth message to the access network element, wherein the ninth message indicates that registration of the terminal device is accepted.

21. The method according to claim 19 or 20, wherein before sending the seventh message to the first mobility management network element in the first network, the method further comprises at least one of the following:
sending, to a unified data management network element in the second network, a message used to request to obtain subscription information of the terminal device, and receiving the subscription information of the terminal device from the unified data management network element in the second network;
sending, to an authentication service network element in the second network, a message used to request to obtain authorization information of the terminal device, and receiving the authorization information of the terminal device from the authentication service network element in the second network; or
sending, to a policy control network element in the second network, a message used to request to obtain access policy information of the terminal device, and receiving the access policy information of the terminal device from the policy control network element in the second network.

22. The method according to any one of claims 19 to 21, wherein the seventh message comprises an identifier of the second network and/or an identifier of the first network, and the identifier of the first network is used to determine the identifier of the second network; and the method further comprises:
determining, based on the identifier of the second network and/or the identifier of the first network, that setup of the communication connection to the access network element is accepted.

23. A method for registering a terminal device, applied to an access network element, wherein the method comprises:
receiving a tenth message from the terminal device, wherein the tenth message comprises a registration request message, the registration request is used to request registration of the terminal device, and the tenth message indicates an identifier of a second network;
sending a sixth message to a first mobility management network element in a first network, wherein the sixth message is used to request to set up a communication connection between the access network element and a second mobility management network element in the second network, the sixth message comprises an address of the second mobility management network element, and the address of the second mobility management network element is related to the identifier of the second network; and
receiving a connection setup response message from the first mobility management network element, wherein the connection setup response message indicates that the second mobility management network element accepts setup of the communication connection to the access network element.

24. The method according to claim 23, wherein the tenth message further comprises a second parameter, and one of the registration request message and the second parameter comprises the identifier of the second network and/or an identifier of the terminal device, wherein
the second parameter is used to assist in accessing the terminal device, and the identifier of the terminal device is used to determine the identifier of the second network.

25. The method according to claim 23 or 24, wherein after receiving the connection setup response message from the first mobility management network element, the method further comprises:
sending an eighth message to the second mobility management network element, wherein the eighth message is used to request registration of the terminal device; and
receiving a ninth message from the second mobility management network element, wherein the ninth message indicates that registration of the terminal device is accepted.

26. The method according to any one of claims 23 to 25, wherein the method further comprises:
determining, based on the identifier of the second network, that registration of the terminal device is allowed.

27. A method for registering a terminal device, comprising:
receiving, by a first mobility management network element in a first network, a first message from an access network element, wherein the first message comprises a registration request message, the registration request message is used to request registration of a terminal device, and the first message indicates an identifier of a second network;
sending, by the first mobility management network element, a second message to a second mobility management network element in the second network based on the identifier of the second network, wherein the second message comprises the registration request message; and
sending, by the second mobility management network element, a third message to the first mobility management network element, wherein the third message indicates that registration of the terminal device is accepted.

28. The method according to claim 27, wherein the method further comprises:
receiving, by the access network element, a fifth message from the terminal device, wherein the fifth message comprises the registration request message, and the fifth message indicates the identifier of the second network.

29. The method according to any one of claims 1 to 28, wherein
the first network is a visited network of the terminal device, and the second network is a home network of the terminal device.

30. The method according to any one of claims 1 to 29, wherein
the access network element is an access network element shared between the first network and the second network.

31. A communication apparatus, comprising a module configured to perform the method according to any one of claims 1 to 30.

32. A communication apparatus, comprising a processor and a communication interface, wherein the communication interface is configured to: receive a signal from another apparatus other than the communication apparatus and transmit the signal to the processor or send a signal from the processor to the another apparatus other than the communication apparatus, and the processor executes code instructions through a logic circuit to implement the method according to any one of claims 1 to 30.

33. A communication system, comprising a first mobility management network element and a second mobility management network element, wherein
the first mobility management network element is configured to perform the method according to any one of claims 1 to 6, and the second mobility management network element is configured to perform the method according to any one of claims 7 to 10.

34. A communication system, comprising a first mobility management network element, a second mobility management network element, and an access network element, wherein
the first mobility management network element is configured to perform the method according to any one of claims 16 to 18, the second mobility management network element is configured to perform the method according to any one of claims 19 to 22, and the access network element is configured to perform the method according to any one of claims 23 to 26.

35. A computer-readable storage medium, wherein the storage medium stores a computer program or instructions; and when the computer program or the instructions are executed by a communication apparatus, the method according to any one of claims 1 to 30 is implemented.
